# EUROPEAN PATENT APPLICATION

(11) **EP 4 535 203 A1**
(43) Date of publication of application: **09.04.2025**
(21) Application number: 23859217.4
(22) Date of filing: 23.08.2023
(51) Int. Cl.: G06F 21/51, G06F 16/11

(54) **FILE MANAGEMENT AND APPLICATION MANAGEMENT METHOD, AND ELECTRONIC DEVICE**

(30) Priority: 31.08.2022 CN 202211057387
(71) Applicant: Huawei Technologies Co., Ltd., Shenzhen, Guangdong 518129 (CN)
(72) Inventor: ZHANG, Zhiwei, Shenzhen, Guangdong 518129 (CN); ZHANG, Daiyue, Shenzhen, Guangdong 518129 (CN); QIU, Ge, Shenzhen, Guangdong 518129 (CN); WANG, Xinjian, Shenzhen, Guangdong 518129 (CN); GU, Dehe, Shenzhen, Guangdong 518129 (CN)
(74) Representative: Körber, Martin Hans
(86) International application number: PCT/CN2023/114448
(87) International publication number: WO 2024/046184

(57) **Abstract**

Embodiments of this application provide a file management method, an application management method, and an electronic device. The method includes: An electronic device installs a first application through an application market, where the first application corresponds to a permission configuration file, and the permission configuration file indicates a permission, for a file type, that is approved by the application market through reviewing and that the first application is capable of applying for; when the first application wants to access a file in the electronic device, the first application requests to apply for a first permission; if the permission configuration file includes the first permission, the electronic device displays a first interface, where the first interface is used to request a user to grant the first permission; and the first application obtains the first permission in response to a first operation that the user agrees to grant the first permission. According to solutions provided in this application, in the conventional technology, file disorder caused by randomly adding, deleting, modifying, and querying a public file in the electronic device after an application obtains some improper permissions can be avoided.

## Description

This application claims priority to Chinese Patent Application No. 202211057387.5, filed with the China National Intellectual Property Administration on August 31, 2022 and entitled "FILE MANAGEMENT METHOD, APPLICATION MANAGEMENT METHOD, AND ELECTRONIC DEVICE", which is incorporated herein by reference in its entirety.

### TECHNICAL FIELD

Embodiments of this application relate to the data management field, and in particular, to a file management method, an application management method, and an electronic device.

### BACKGROUND

With rapid development of internet of things technologies and software technologies, intelligent terminal devices become an indispensable part of daily life in the new era, and include devices such as a smartphone, a tablet, and a PC. In addition, the intelligent terminal devices carry more user data, including lots of information, for example, taken photos and videos, important documents for daily office work, and chat records of various social chat software. How to manage public data on an intelligent terminal device becomes an important issue.

### SUMMARY

Embodiments of this application provide a file management method, an application management method, and an electronic device, to avoid file disorder.

According to a first aspect, a file management method is provided, where the method includes: An electronic device installs a first application through an application market, where the first application corresponds to a permission configuration file, and the permission configuration file indicates a permission, for a file type, that is approved by the application market through reviewing and that the first application is capable of applying for; when the first application wants to access a file in the electronic device, the first application requests to apply for a first permission; the electronic device displays a first interface if the permission configuration file includes the first permission, where the first interface is used to request a user to grant the first permission; and the first application obtains the first permission in response to a first operation that the user agrees to grant the first permission.

According to a solution provided in this embodiment of this application, when the electronic device installs, through the application market, the first application approved by the application market through reviewing, and when the first application wants to access the file in the electronic device, the first application may request to apply for the first permission. Only when the permission configuration file includes the first permission, the electronic device may display the first interface in which the first permission is requested to be granted by the user, and the first application can obtain the first permission when the user agrees to grant the first permission. In other words, the first application can obtain the first permission only when the application market approves the first application through reviewing and the user agrees to grant the applied first permission, and then the user can perform a corresponding permission operation on the file in the electronic device. Compared with a solution in the conventional technology in which an application developer independently determines specific permissions that are requested to be granted by the user and an application obtains the corresponding permissions once the user grants the permissions, the solution in this application can be used to provide a mechanism for the application market to review whether a permission that a to-be-released application wants to apply for is proper, so that the first application can be prevented from applying, through a pop-up window to the user at a source, for granting some improper permissions. Further, in the conventional technology, file disorder caused by randomly adding, deleting, modifying, and querying a public file in the electronic device after the application obtains some improper permissions can be avoided.

With reference to the first aspect, in some possible implementations, the method further includes: The electronic device skips displaying the first interface if the permission configuration file does not include the first permission.

According to a solution provided in this embodiment of this application, the application market configures the permission configuration file for the first application based on a review result. When the permission configuration file does not include the first permission requested by the first application, the electronic device may not display the first interface in which the first permission is requested to be granted by the user, the first application does not have the first permission, and further, the user cannot perform a corresponding permission operation on the file in the electronic device. Compared with a solution in the conventional technology in which an application developer independently determines specific permissions that are requested to be granted by the user and the application obtains the corresponding permissions once the user grants the permissions, the solution in this application can be used to provide a mechanism for the application market to review whether a permission that a to-be-released application wants to apply for is proper, so that the first application can be prevented from applying, through a pop-up window to the user at a source, for granting some improper permissions. Further, in the conventional technology, file disorder caused by randomly adding, deleting, modifying, and querying a public file in the electronic device after the application obtains some improper permissions can be avoided.

With reference to the first aspect, in some possible implementations, the method further includes: The electronic device installs a second application through the application market; and when the second application wants to access the file in the electronic device, the second application accesses the file in the electronic device through a file picker provided by an operating system of the electronic device.

According to a solution provided in this embodiment of this application, the electronic device installs the second application through the application market. When the second application wants to access the file in the electronic device, the second application may access the file in the electronic device through the file picker provided by the operating system of the electronic device, that is, the second application may access, through an interface provided by the file picker, a target file that the user wants to access. In this manner, it can be ensured that the second application can access the file in the electronic device, and the second application can be restricted from randomly accessing or operating the file in the electronic device, so that in the conventional technology, file disorder caused by randomly adding, deleting, modifying, and querying a public file in the electronic device by the second application can be avoided.

With reference to the first aspect, in some possible implementations, that the second application accesses the file in the electronic device through a file picker specifically includes: The electronic device displays a second interface, where the second interface includes one or more candidate files provided by the file picker; the electronic device receives a second operation that the user determines one or more target files from the one or more candidate files; and the second application obtains, in response to the second operation, a permission to access the one or more target files.

According to a solution provided in this embodiment of this application, the electronic device installs the second application through the application market. When the second application wants to access the file in the electronic device, the electronic device displays the second interface including the one or more candidate files provided by the file picker, and the user may allow the second application to access the target file selected by the user in the candidate file. In other words, the second application may access, through the interface provided by the file picker, the target file selected by the user in the candidate file, but cannot access any candidate file. In this manner, it can be ensured that the second application can access the file selected by the user from the electronic device for access, and the second application can be restricted from randomly accessing or operating the file in the electronic device, so that in the conventional technology, file disorder caused by randomly adding, deleting, modifying, and querying a public file in the electronic device by the second application can be avoided.

With reference to the first aspect, in some possible implementations, the first application is a management application, and the management application is an application that relies on accessing a large quantity of one or more types of files in the electronic device to implement a main function of the management application; and the second application is a non-management application, and the non-management application is an application that does not rely on accessing a large quantity of one or more types of files in the electronic device to implement a main function of the non-management application.

With reference to the first aspect, in some possible implementations, the file in the electronic device is stored in a file management module, and the method further includes: The first application accesses a target file through a first interface of the file management module, where a file type of the target file is the same as a file type that the first permission is applied for.

According to a solution provided in this embodiment of this application, the file in the electronic device is stored in the file management module, the first application may access the target file through the first interface of the file management module, and the file type of the target file is the same as the file type that the first permission is applied for. Because the file in the electronic device is stored in the file management module, when the first application wants to access the file on the electronic device, the first application may access the file through the first interface of the file management module. Compared with the solution in the conventional technology in which applications store respective files, the solution in this application can be used to reduce a waste of storage resources.

With reference to the first aspect, in some possible implementations, that the permission configuration file indicates a permission, for a file type, that is approved by the application market through reviewing and that the first application is capable of applying for includes any one of the following: a permission to access or operate a picture/video file, a permission to access or operate an audio file, and a permission to access or operate a document file.

According to a solution provided in this embodiment of this application, the permission, for the file type, that the first application is capable of applying for and that is included in the permission configuration file configured by the application market for the first application may include any one of the permission to access or operate the picture/video file, the permission to access or operate the audio file, and the permission to access or operate the document file. In a running process of the first application, the first application may apply, according to a requirement, for a permission that is required by the first application to perform a specific type of operation on a specific type of file and that is required by the first application to perform a current function, and the user grants the permission to the application as required. Compared with a solution in the conventional technology in which the application applies for a permission to perform any type of operation (read, write, edit, or the like) on any type of file (a document, a picture, an audio, a video, or the like) in storage space, the solution in this application can be used to avoid file disorder caused by the any type of operation performed by the application on the any type of file.

With reference to the first aspect, in some possible implementations, the permission to access or operate the picture/video file includes: a permission to read, edit, delete, or create the picture/video file; the permission to access or operate the audio file include a permission to read, edit, delete, or create the audio file; and the permission to access or operate the document file includes a permission to read, edit, delete, or create the document file.

With reference to the first aspect, in some possible implementations, the file in the electronic device is stored in a corresponding preset directory based on the file type.

According to a solution provided in this embodiment of this application, the file in the electronic device is stored in the corresponding preset directory based on the file type. When an application needs to obtain a type of file, the application can quickly find the corresponding file.

With reference to the first aspect, in some possible implementations, the first application does not have a permission to create a new directory or a new file outside a preset directory that already exists in the electronic device.

According to a solution provided in this embodiment of this application, the first application does not have the permission to create the new directory or the new file outside the preset directory that already exists in the electronic device. In other words, the first application cannot create the new directory or the new file outside the preset directory that already exists in the electronic device, so that order of files in the electronic device can be ensured.

With reference to the first aspect, in some possible implementations, the file in the electronic device is stored in the file management module, and the method further includes: The electronic device modifies, through the first application, metadata information of the target file stored in the file management module, where the file type of the target file is the same as the file type that the first permission is applied for; and when the electronic device accesses the target file through the second application, the second application obtains metadata information that is of the target file and that is modified by the electronic device through the first application, where the second application is different from the first application.

According to a solution provided in this embodiment of this application, the first application may modify the metadata information of the target file stored in the file management module. When the electronic device accesses the target file through the second application, the second application may obtain the metadata information that is of the target file and that is modified by the electronic device through the first application. In this manner, when the first application modifies the metadata information of the target file in the file management module, the second application may also learn from the file management module, so as to implement sharing of the metadata information of the file between the applications. A problem that another application cannot learn in time after a specific application modifies metadata information of a file in some current operating systems can be resolved.

According to a second aspect, an application management method is provided, where the method includes: An application market obtains a data packet of a first application and a permission that is applied for by the first application and that is submitted by a developer of the first application; the application market reviews whether the permission applied for by the first application is proper; and the application market configures a permission configuration file for the first application based on a review result, where the permission configuration file indicates a permission, for a file type, that is approved by the application market through reviewing and that the first application is capable of applying for.

According to a solution provided in this embodiment of this application, after obtaining the data packet of the first application and the permission that is applied for by the first application and that is submitted by the developer of the first application, the application market may review whether the permission applied for by the first application is proper, and configure, for the first application based on the review result, the permission configuration file indicating the permission, for the file type, that is approved by the application market through reviewing and that the first application is capable of applying for. In such a review mechanism, some improper applied permissions can be filtered out for a user, and the user does not need to autonomously determine whether to grant the permission applied for by the first application. Especially for some malicious applications, the application market may filter out some improper applied permissions in advance. Compared with a solution in the conventional technology in which the application developer independently determines specific permissions that are requested to be granted by the user and the application obtains the corresponding permissions once the user grants the permissions, the solution in this application can be used to provide the released review mechanism of the application market to avoid public file disorder caused by randomly adding, deleting, modifying, and querying the file in the electronic device by the malicious application because the user cannot determine and grants some improper permissions to the malicious application.

With reference to the second aspect, in some possible implementations, that the application market reviews whether the permission applied for by the first application is proper includes:
The application market reviews, based on an application type of the first application, whether the permission applied for by the first application is proper.

According to a solution provided in this embodiment of this application, the application market reviews, based on the application type of the first application, whether the permission applied for by the first application is proper. If the first application is the management application, the application market may further review whether the permission applied for by the first application is proper, and configure the permission configuration file for the first application. In this way, the first application can access or operate a file with a corresponding permission based on the permission configuration file. If the first application is the non-management application, the application market may not review reasonableness of the permission applied for by the first application, and may directly reject the permission applied for by the first application. In this way, the first application may access or operate the file selected by the user. Permissions of an application may be distinguished in such a review mechanism. Compared with a solution in the conventional technology in which an application developer independently determines specific permissions that are requested to be granted by the user and the application obtains the corresponding permissions once the user grants the permissions, the solution in this application can be used to provide the released review mechanism of the application market to avoid public file disorder caused by randomly adding, deleting, modifying, and querying a file in the electronic device when the application obtains some improper permissions in the conventional technology.

With reference to the second aspect, in some possible implementations, the application type includes a management application and a non-management application, the management application is an application that relies on accessing a large quantity of one or more types of files in an electronic device to implement a main function of the management application, and the non-management application is an application that does not rely on accessing a large quantity of one or more types of files in the electronic device to implement a main function of the non-management application.

According to a third aspect, an apparatus is provided. The apparatus is included in an electronic device, and the apparatus has a function of implementing behavior of the electronic device in the foregoing aspect and the possible implementations of the foregoing aspect. The function may be implemented by hardware, or may be implemented by executing corresponding software by hardware. The hardware or the software includes one or more modules or units corresponding to the foregoing function.

According to a fourth aspect, an electronic device is provided, including one or more processors, a memory, one or more applications, and one or more computer programs. The one or more computer programs are stored in the memory. The one or more computer programs include instructions. When the instructions are executed by the electronic device, the electronic device is enabled to perform the method in any possible implementation of the first aspect or the second aspect.

According to a fifth aspect, a chip system is provided, including at least one processor. When program instructions are executed in the at least one processor, a function of the method in any possible implementation of the first aspect or the second aspect is implemented on an electronic device.

According to a sixth aspect, a computer storage medium is provided, including computer instructions. When the computer instructions are run on an electronic device, the electronic device is enabled to perform the method in any possible implementation of the first aspect or the second aspect.

According to a seventh aspect, a computer program product is provided. When the computer program product runs on an electronic device, the electronic device is enabled to perform the method in any possible design of the first aspect or the second aspect.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3 is a diagram of a public data access entry according to an embodiment of this application;
FIG. 4 is a diagram of accessing a file in a mobile phone by an application according to an embodiment of this application;
FIG. 5 is another diagram of accessing a file by an application according to an embodiment of this application;
FIG. 6(a) to FIG. 6(k) are a diagram of a group of GUIs according to an embodiment of this application;
FIG. 7(a) to FIG. 7(g) are a diagram of another group of GUIs according to an embodiment of this application;
FIG. 8(a) to FIG. 8(g) are a diagram of still another group of GUIs according to an embodiment of this application;
FIG. 9(a) to FIG. 9(g) are a diagram of yet another group of GUIs according to an embodiment of this application;
FIG. 10(a) to FIG. 10(i) are a diagram of yet another group of GUIs according to an embodiment of this application;
FIG. 11(a) to FIG. 11(h) are a diagram of yet another group of GUIs according to an embodiment of this application;
FIG. 12A to FIG. 12C are a diagram of a file management method and an application management method according to an embodiment of this application;
FIG. 13 is a diagram of data classification according to an embodiment of this application;
FIG. 14 is a diagram of file classification according to an embodiment of this application;
FIG. 15 is an iOS sandbox restriction-based diagram;
FIG. 16 is a diagram of metadata distribution of an Android operating system;
FIG. 17A to FIG. 17C are a diagram of another file management method and application management method according to an embodiment of this application;
FIG. 18 is a diagram of still another file management method and application management method according to an embodiment of this application;
FIG. 19 is a block diagram of an electronic device according to an embodiment of this application; and
FIG. 20 is a block diagram of another electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features.

The solutions provided in this application may be applied to an electronic device, for example, a mobile phone, a tablet computer, a personal computer (personal computer, PC) wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in this embodiment of this application.

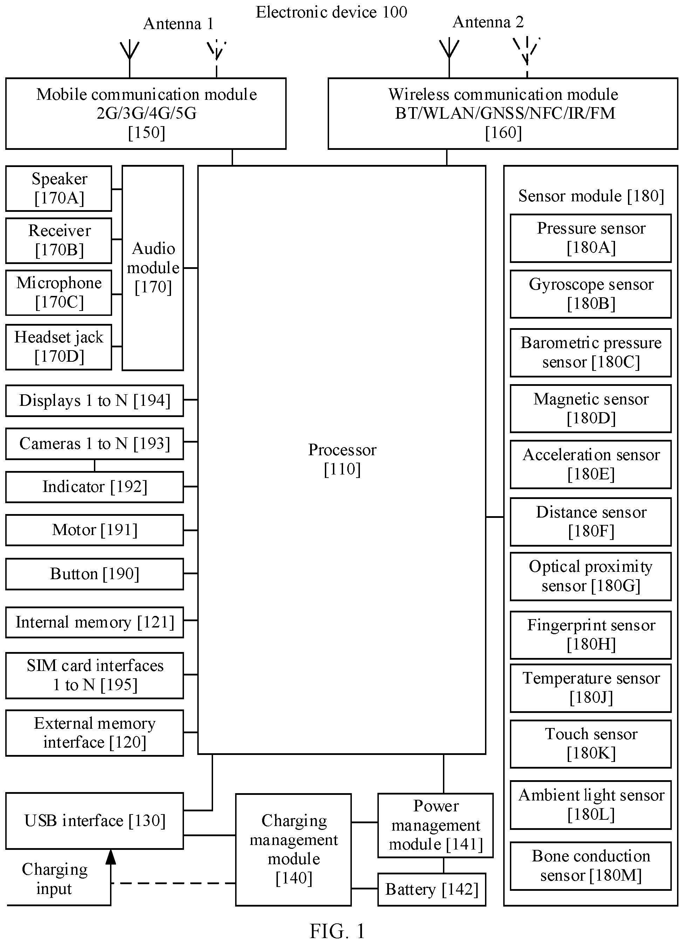

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have/has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing, for example, filtering or amplification, on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. The camera 193 is configured to capture a static image or a video. The video codec is configured to compress or decompress a digital video.

The external memory interface 120 may be configured to connect to an external storage card, for example, a micro SD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing.

The electronic device 100 may implement an audio function, for example, music playing or recording, through the audio module 170, the speaker 170A, the receiver 170B, the microphone 170C, the headset jack 170D, the application processor, and the like.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

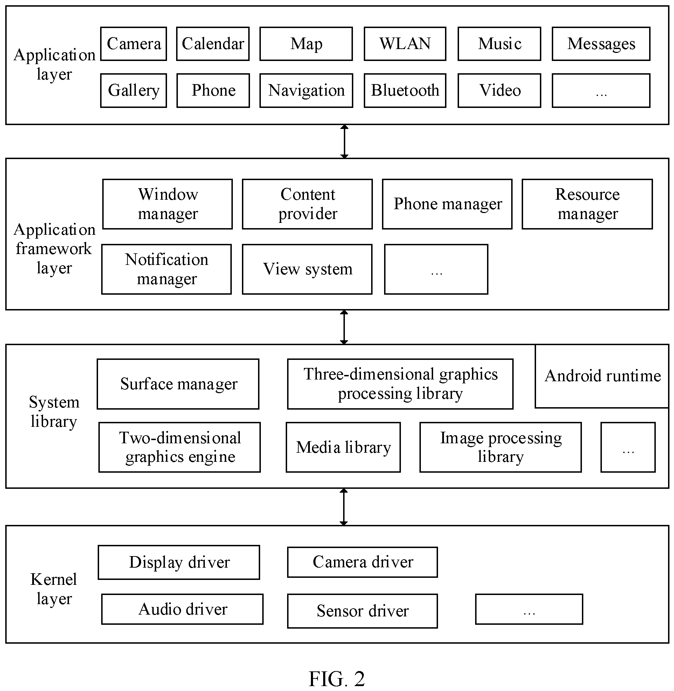

FIG. 2 is a block diagram of the software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application package may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system can be used to build an application. A display interface may include one or more views. For example, a display interface including an SMS message notification icon may include a text display view and a picture display view.

The phone manager is configured to provide a communication function of the electronic device 100, for example, management of a call status (including answering, declining, or the like).

The resource manager provides various resources for an application, such as a localized character string, an icon, a picture, a layout file, and a video file.

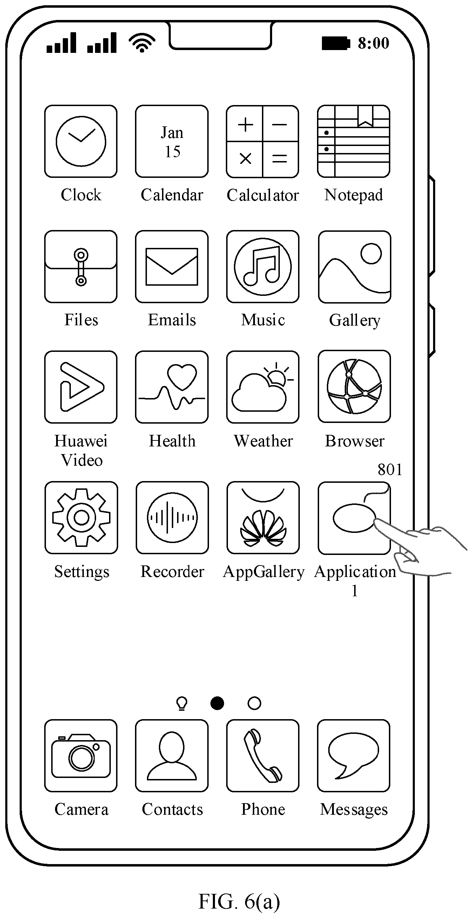

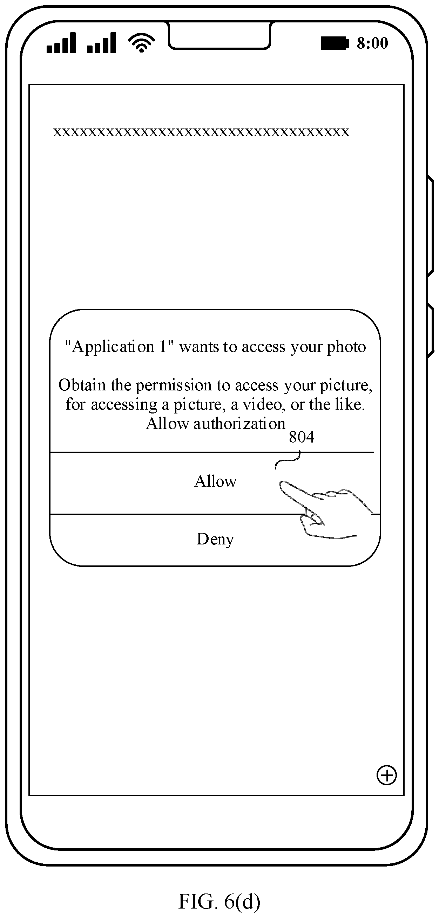

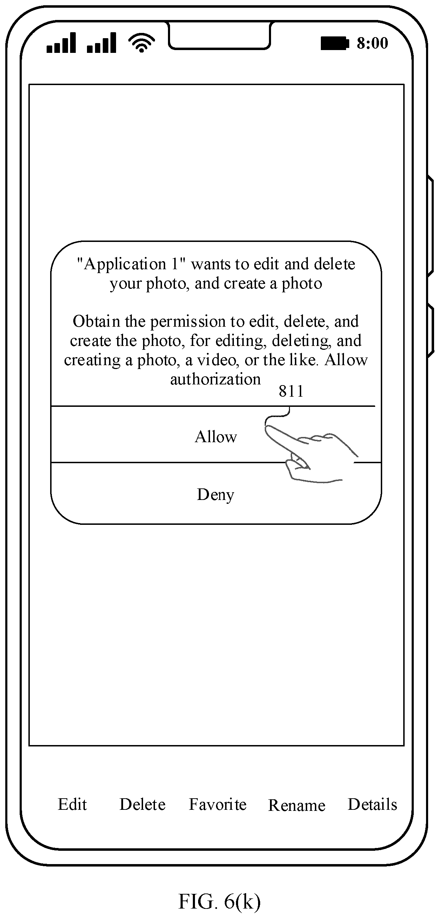

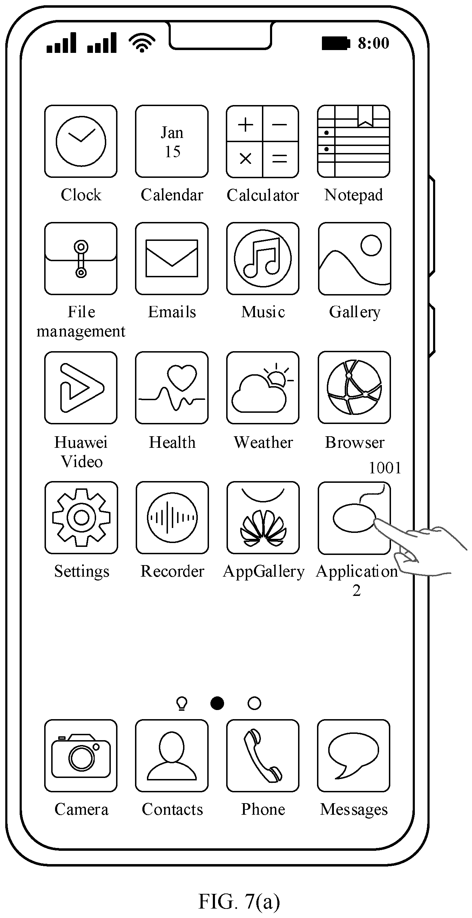

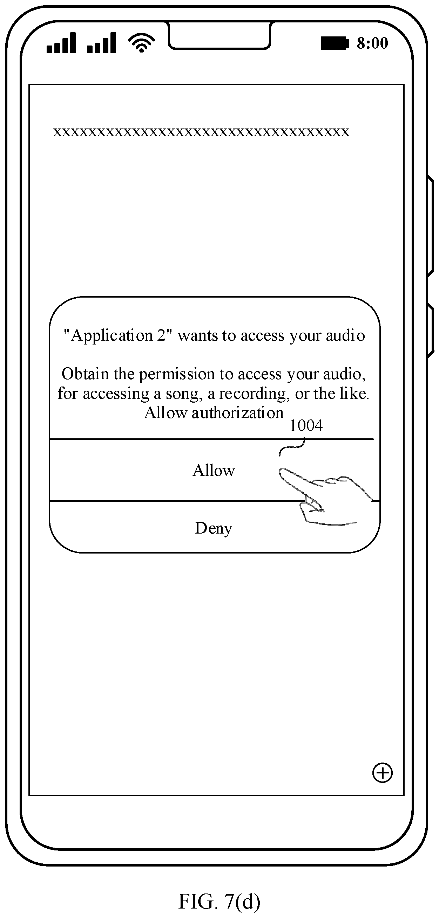

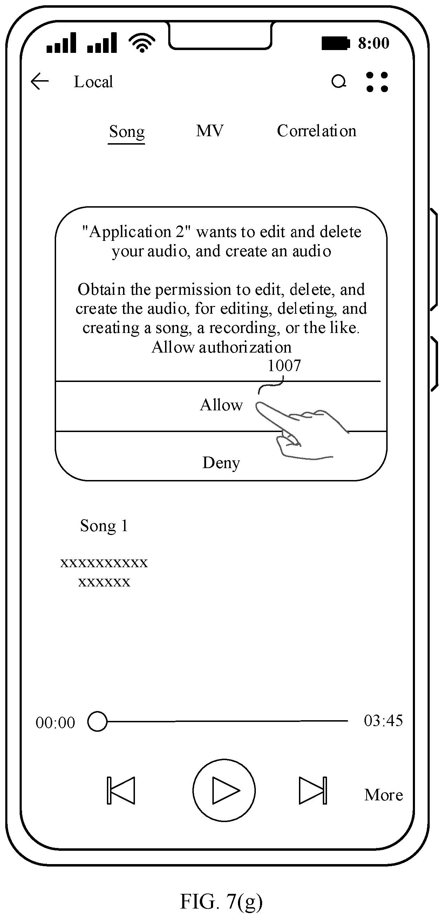

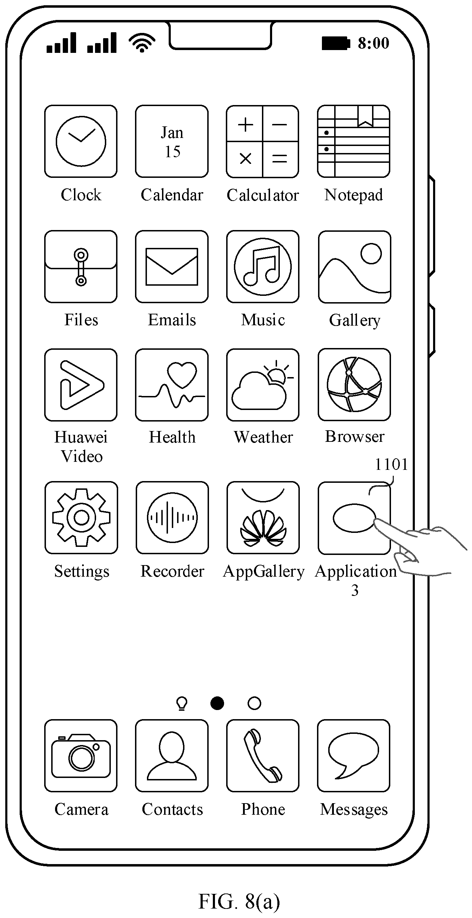

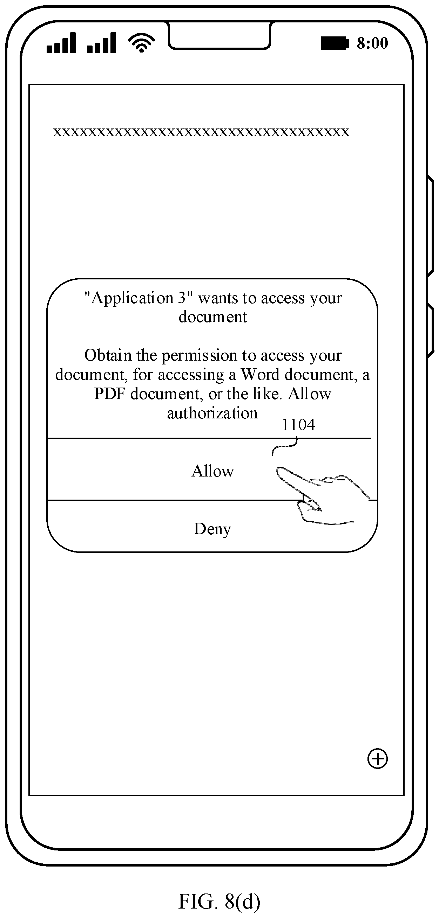

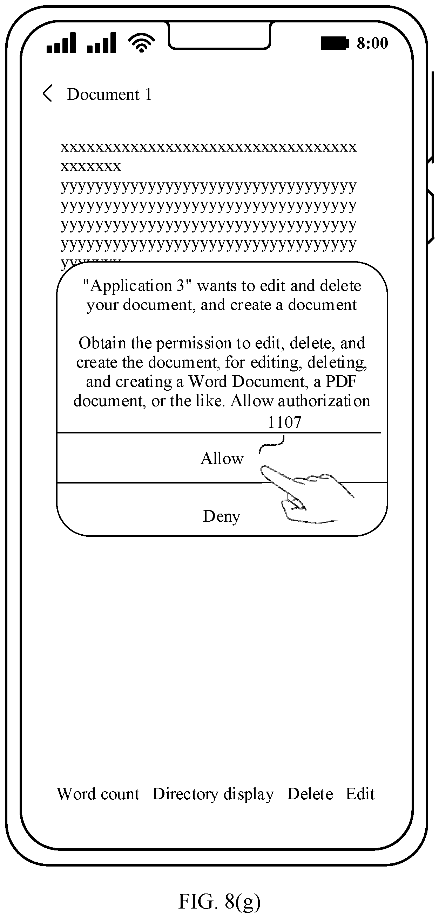

The notification manager enables an application to display notification information in a pop-up window, for example, a GUI shown in FIG. 6(d), a GUI shown in FIG. 6(k), a GUI shown in FIG. 7(d), a GUI shown in FIG. 7(g), a GUI shown in FIG. 8(d), and a GUI shown in FIG. 8(g), to display corresponding information used to notify a user.

The Android runtime includes a core library and a virtual machine. The Android runtime is responsible for scheduling and management of the Android system.

The kernel library includes two parts: a function that needs to be called in Java language and a kernel library of Android.

The system library may include a plurality of functional modules, for example, a surface manager (surface manager), a media library (media library), a three-dimensional graphics processing library (for example, OpenGL ES), and a 2D graphics engine (for example, SGL).

For ease of understanding, the following describes a background technology related to this application with reference to the accompanying drawings.

With rapid development of internet of things technologies and software technologies, intelligent terminal devices become an indispensable part of daily life in the new era, including devices such as a smartphone, a tablet, and a PC. In addition, the intelligent terminal devices carry more and more user data, including lots of information, for example, photos and videos taken, important documents for daily office work, and chat records of various social chat software. How to manage public data on an intelligent terminal device becomes an important issue.

Currently, the intelligent terminal device has an extremely open permission to access public data, and many applications can easily add or delete data on the terminal device at will. As a result, public data is disordered and management is disordered.

For example, for a device loaded with a Windows operating system, the public data is basically managed by applications and users. The system does not provide a unified management mode. Specifically, files on this type of terminal device are directly presented to a user in a form of a directory tree. The user may access any file on the terminal device, and may randomly add, delete, modify, or query (add, delete, modify, or query for short) each file on the terminal device. Each application can add, delete, modify, and query files anywhere according to willingness of the application. As a result, public data is disordered and user experience is reduced.

For a terminal device loaded with an Android operating system, each application also randomly adds, deletes, modifies, and queries a public file according to willingness of the application. As a result, public data is disordered.

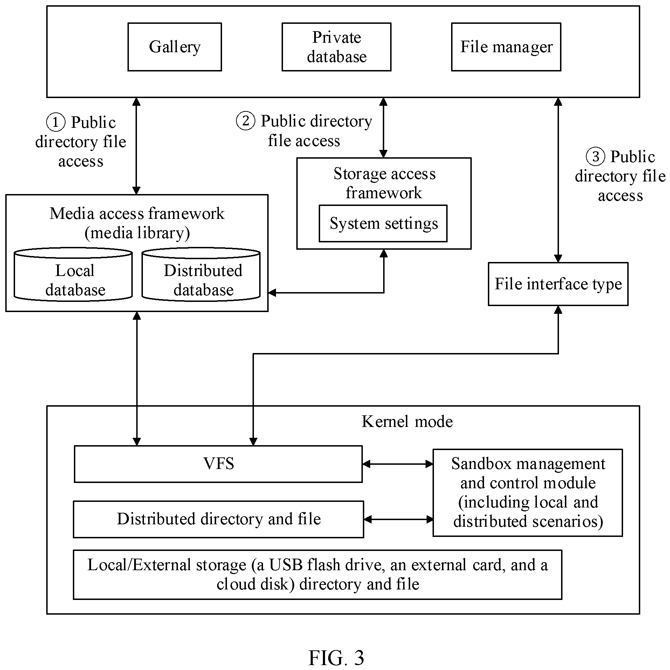

FIG. 3 is a diagram of a public data access entry according to an embodiment of this application.

The operating system provides a plurality of access entries for accessing public data: accessing the public data through a media library, through a system picker (system picker), or directly through a file (file) interface. Public data accessed through the media library and system picker passes through the media library. Therefore, the media library can perform permission interception on the public data in a unified manner, to control purity and order of the public data. However, public data accessed through the file interface (such as open, read, or write) does not pass through the media library. An application can add, delete, modify, and query a public file according to willingness of the application. As a result, public data disorder occurs.

In other words, in the conventional technology, application permission management is autonomously performed by a user. If the user agrees to grant, to an application, a specific permission that the application applies for, the application has the permission. However, it is often difficult for the user to determine whether it is proper to grant the permission to the application, that is, whether the permission should be granted to the application. For example, some malicious applications may apply to the user for a large quantity of permissions in a pop-up window. Once the user grants the permissions to the malicious applications, the malicious applications may randomly add, delete, modify, and query a file on an electronic device. As a result, public file disorder occurs.

To resolve this problem, embodiments of this application provide a released review mechanism of an application market. When an application is to be released to the application market, if the application wants to obtain one or more types of permissions of a large quantity of files of one or more types (for example, a permission to read and edit a large quantity of full pictures and videos, and a permission to read a large quantity of audios), an application developer needs to submit, to the application market, the permissions applied for by the application, and the application market reviews whether the permissions applied for by the application are proper. For example, it is proper for a file manager application to apply for a permission to access and edit a large quantity of documents, pictures, videos, and audios. It is improper for an album application to apply for a permission to access and edit a large quantity of documents, but it is proper for the album application to apply for a permission to access and edit a large quantity of pictures and videos.

After the permission is approved by the application market through reviewing, an application permission certificate is granted to the application. The permission certificate identifies the permission that the application is capable of applying for. The permission certificate may be carried in an installation package of the application. After an application is installed on the electronic device of the user, if the application applies for a specific permission in a running process of the application, the electronic device determines, based on whether a permission certificate corresponding to the application includes the permission that the application currently applies for, whether to display a pop-up window for requesting the user to grant the permission.

Specifically, if the permission certificate corresponding to the application does not include the permission that the application currently applies for, the electronic device does not display the pop-up window for requesting the user to grant the permission. If the permission certificate corresponding to the application includes the permission that the application currently applies for, the electronic device displays the pop-up window for requesting the user to grant the permission, and the application can obtain the permission that is currently applied for only after the user taps "Agree".

In the conventional technology, when applying for a storage space permission, the application may apply for a permission to perform any type of operation (reading, writing, editing, or the like) on any type of file (a document, a picture, an audio, a video, or the like) in storage space. Once the user grants the storage space permission to the application, the application can perform any type of operation on any type of file. As a result, file disorder occurs.

To resolve this problem, embodiments of this application further provide a file permission management mechanism. The storage space permission is classified into fine-grained permissions based on a file type and an operation type. In a running process, the application applies, as required, for a permission that is required by the application to perform a specific type of operation on a specific type of file and that is for performing a current function, and then the user grants the permission to the application as required.

In view of this, embodiments of this application provide a file management method and an application management method. A permission of a terminal device is set to an application market management and control manner in permission configuration. The application market determines, based on an application type, whether an application has a permission to directly access public data. When determining that the application has the permission to directly access the public data, the application market grants a corresponding proper access permission to the application based on a type of a file that the application applies for accessing, so that the application can access the corresponding file based on the authorized permission. This avoids public data disorder.

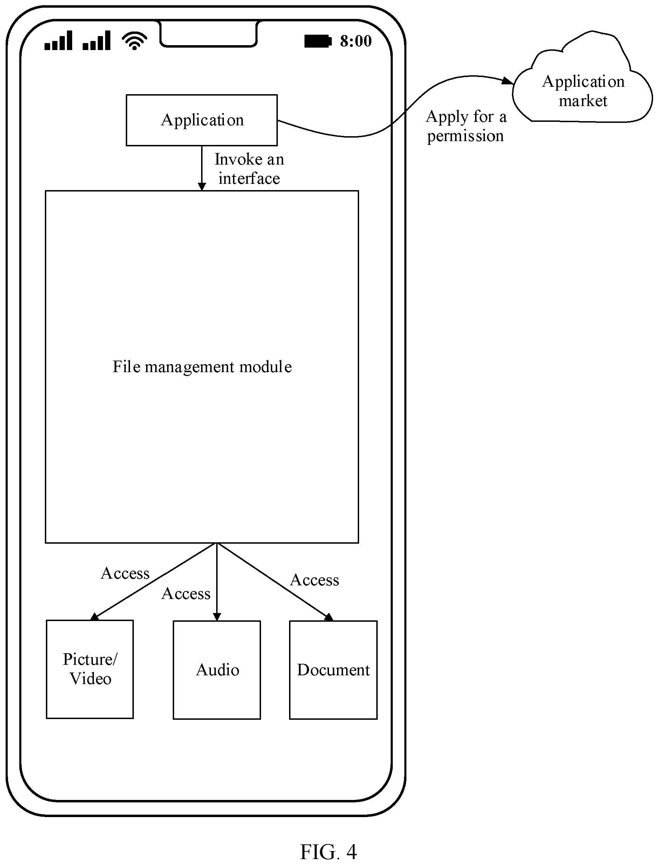

FIG. 4 is a diagram of accessing a file in a mobile phone by an application according to an embodiment of this application.

An application market is used to review a permission applied for by an application. For example, the application market reviews whether a specific application has a permission to apply for a picture/video, an audio, a document, or the like.

An application is used to access files on devices such as a local device, a local area network device, and a cloud disk.

A file management module is a main functional module for an application to access a file, and may provide an interface for the application to access data, verify a permission applied for by the application, and manage files on a local device, a local area network device, and a cloud disk. Files on the local device include a picture/video, an audio, a document, and the like that are stored on the local device, files on the local area network device include a picture/video, an audio, a document, and the like that are stored on the local area network device, and files on the cloud disk include a picture/video, an audio, and a document that are stored on the cloud disk.

In this embodiment of this application, when a newly developed application carrying a certificate for applying for a permission is released, the application market may first review the permission applied for by the newly developed application, to be specific, review whether the permission applied for by the newly developed application is consistent with a permission that the newly developed application should have. When determining that the permission applied for by the newly developed application is consistent with the permission that the newly developed application should have, the application market may authenticate the permission applied for by the newly developed application. When determining that the permission applied for by the newly developed application is inconsistent with the permission that the newly developed application should have, the application market may not authenticate the permission applied for by the newly developed application. When the application market authenticates the permission applied for by the newly developed application, and when a user opens or accesses a picture/video or an audio or a document, the file management module further reviews whether the newly developed application has obtained the permission to access the corresponding file. For example, some applications may have only a permission to access the picture/video, some applications may have only a permission to access the audio, and some applications may have only a permission to access the document. In this case, the file management module reviews whether the permission that the newly developed application applies for to access the file is consistent with the permission authenticated by the application market. After the file management module confirms that the newly developed application has obtained the permission to access the corresponding file, the file management module may return the file accessed by the user.

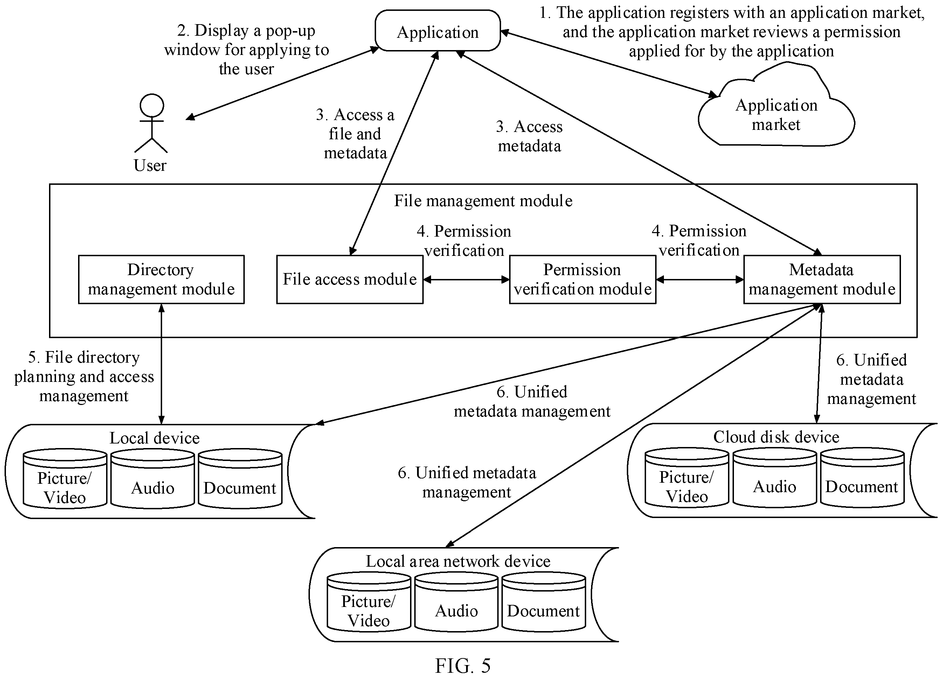

FIG. 5 is another diagram of accessing a file by an application according to an embodiment of this application. Modules shown in the figure may be mainly configured to implement the following functions: a permission verification function, a file access function, a directory management function, and a unified metadata management function.
1. Permission verification function: The function can be implemented through a permission verification module in file management module and the application market.

(1) An application market module may be configured to review whether an application has a permission to apply for a picture/video, an audio, a document, and the like. For example, some applications should not have the permission to apply for the picture/video, the audio, the document, and the like. Such applications may be referred to as non-management applications, such as WeChat^{®} and Weibo^{®}. Some applications may have the permission to apply for the picture/video, the audio, the document, and the like. Such applications may be referred to as management applications, such as Camera, Gallery, and File manager.
(2) The permission verification module may be configured to verify whether the application has obtained a corresponding permission when opening or accessing the picture/video, the audio, or the document. For example, some applications have a permission to open or access a picture/video, but do not have a permission to open or access a document, for example, Camera or Gallery. The permission verification module mainly verifies whether the applications successfully obtain the permission to open or access the picture/video. Some applications have a permission to open or access a document, but do not have a permission to open or access an audio, for example, WPS. The permission verification module mainly verifies whether the applications successfully obtain the permission to open or access the document. Some applications have a permission to open or access an audio, but do not have a permission to open or access a picture/video, for example, a voice recording application. The permission verification module mainly verifies whether the applications successfully obtain the permission to open or access the audio.

Certainly, in some possible implementations, some applications, for example, File manager, may simultaneously have permissions to open or access an audio, a picture/video, and a document.

In conclusion, when the user accesses a file in the mobile phone through the management application, the management application needs to apply to the user for a permission. After the user agrees with the applied permission, that is, only after the management application successfully obtains the permission to access the file in the mobile phone, the application can access the file with the corresponding permission. For example, if a specific management application applies to the user for the permission to open or access a picture/video, the management application can access the picture/video in the mobile phone only after the user agrees with the application. When the user accesses the file in the mobile phone through a non-management application, the non-management application does not need to apply to the user for a permission, and may obtain, from the file management module by invoking an API of a system picker provided by an operating system, the file selected by the user.

It should be noted that the management application in this embodiment of this application is an application that relies on accessing one or more types of full files in the electronic device to implement a main function of the application. For example, an album application relies on accessing full picture and video files in the electronic device to implement a main function of the album application, that is, browsing full pictures and videos in the electronic device. The non-management application is an application that does not rely on accessing one or more types of full files in the electronic device to implement a main function of the application, for example, a WeChat^{®} application. WeChat, as a social application, does not rely on accessing files of one or more types of a full picture and video type, an audio type, and a document type in the electronic device to implement a main function (instant messaging) of the application, but obtains a file selected by the user from the file management module by invoking an API of a system picker provided by an operating system, for example, invoking the API of the system picker to obtain a picture selected by the user to be sent to a chat object.

2. File access function: The function can be implemented through a file access module in the file management module.

The file access module may be configured to:
(1) provide an API for an application to access a file; and
(2) store public data as sandbox data of the file management module, where other applications can obtain desired data from the file management module through the API provided by the file access module.

3. Directory management function: The function can be implemented through a directory management module in the file management module.

The directory management module may be configured to:
(1) set open directories and expose corresponding APIs, to be specific, set three types of directories: picture/video, audio, and document, and provide different APIs for different types of directories; and
(2) check whether stored files comply with directory planning, to be specific, check whether a picture/video file is stored in the picture/video directory, whether an audio file is stored in the audio directory, and whether a document file is stored in the document directory.

4. Unified metadata management function: The function can be implemented through a metadata management module in the file management module.

The metadata management module may be configured to manage and synchronize metadata, where metadata includes metadata of devices such as a local device, a local area network device, and a cloud disk. In addition, metadata management performed by the module may include metadata deletion, favorites collection, and the like.

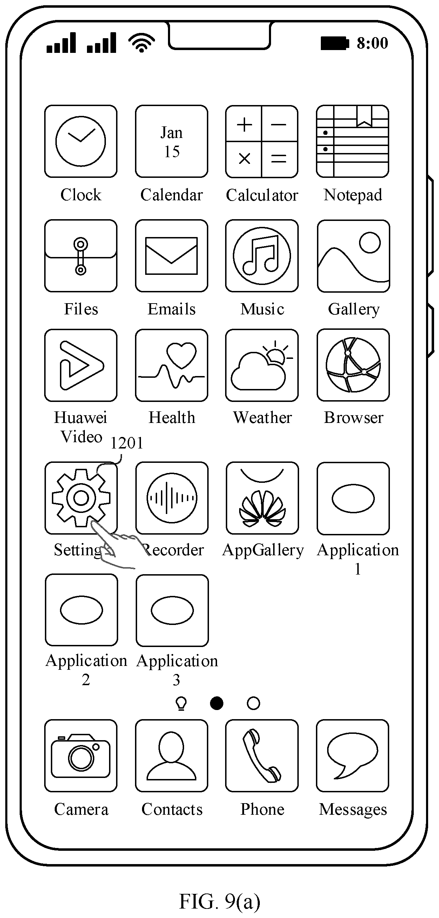

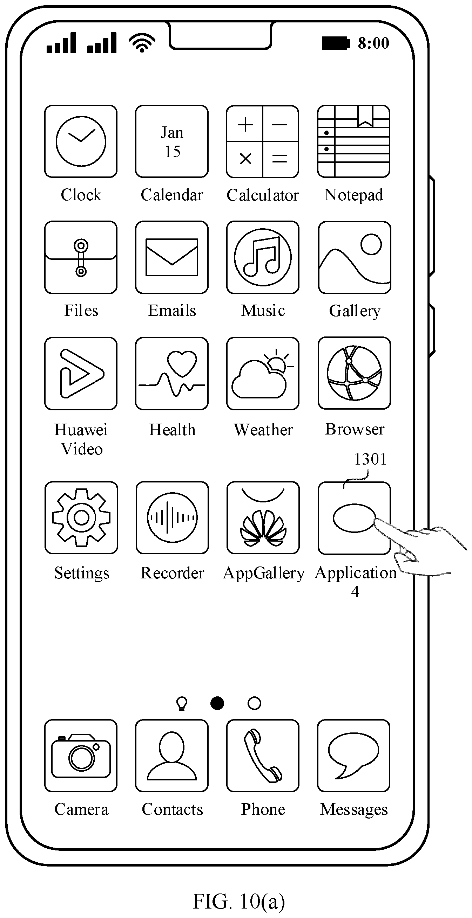

For ease of understanding, in the following embodiments of this application, an example in which a primary device is a mobile phone having the structures shown in FIG. 1 and FIG. 2 is used to describe in detail the solutions provided in embodiments of this application with reference to the accompanying drawings. FIG. 6(a) to FIG. 8(g) show a method for obtaining a file in a mobile phone by a management application. FIG. 9(a) to FIG. 9(g) show a method for canceling a permission of a management application to access a file in a mobile phone. FIG. 10(a) to FIG. 11(h) show a method for obtaining a file in a mobile phone by a non-management application.

FIG. 6(a) to FIG. 6(k) show a set of graphical user interfaces (graphical user interfaces, GUIs) of the mobile phone. From FIG. 6(a) to FIG. 6(k), a method for accessing a photo in the mobile phone by an application 1 on the mobile phone is shown, and the application 1 is a management application. It is assumed that when a developer develops the application 1, a permission that is submitted to an application market and that the application 1 is capable of applying for is reading and writing a picture/video and an audio, but the application market reviews that the application 1 has only a permission to read and write the picture/video, and grants a certificate that the application 1 can apply for the permission to read and write the picture/video.

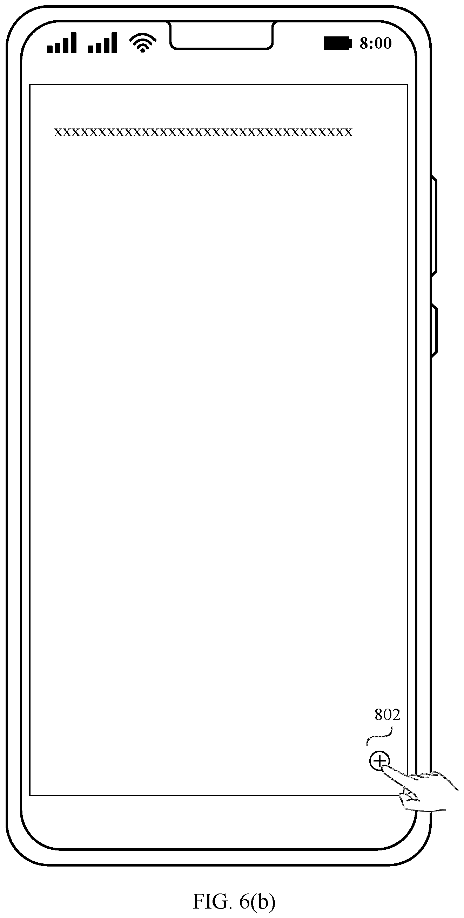

Refer to a GUI shown in FIG. 6(a). The GUI is a desktop of the mobile phone. After the mobile phone detects an operation that a user taps an "Application 1" icon 801 on the desktop, the application 1 may be started, and a GUI shown in FIG. 6(b) is displayed. The GUI may be referred to as an access preparation interface.

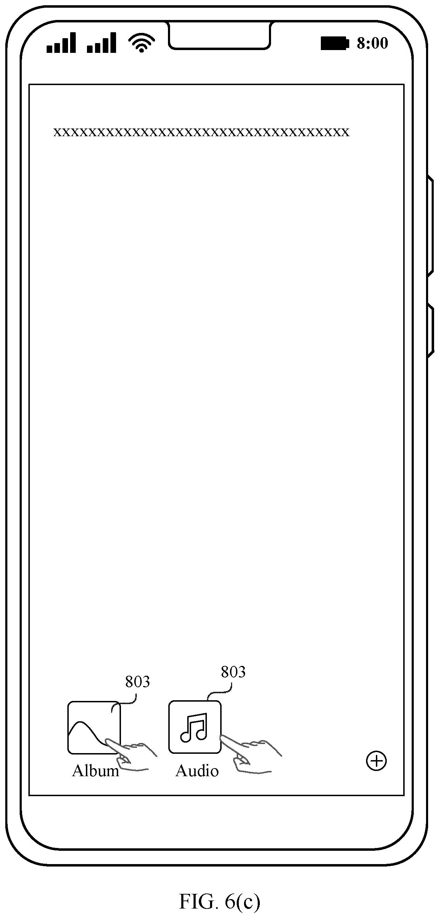

Refer to the GUI shown in FIG. 6(b). The interface displays a main interface (xxxxxxxxxxxxxxxxxxxxxxx shown in the figure) of the application 1, and a lower right corner of the main interface may include an icon. After the mobile phone detects an operation that the user taps the icon 802, a GUI shown in FIG. 6(c) may be displayed.

Refer to the GUI shown in FIG. 6(c). The interface displays the main interface of the application 1. In addition, a lower left corner of the main interface of the application 1 may include an "Album" icon and an "Audio" icon. The user may tap an icon corresponding to "Album" or "Audio". After the mobile phone detects an operation that the user taps the "Audio" icon 803, the interface does not display a new interface. After the mobile phone detects the operation that the user taps the "Album" icon 803, a GUI shown in FIG. 6(d) may be displayed. Because when developing the application 1, the developer wants the application 1 to have the permission to apply for the picture/video and the audio, the "Album" icon and the "Audio" icon are displayed in FIG. 6(c). However, the application market reviews that the application 1 has only the permission to apply for the picture/video, but does not have the permission to apply for the audio. Therefore, the application market may grant a certificate that the application 1 can apply for the permission to apply for the picture/video. Therefore, when the user taps the "Audio" icon, the interface of the mobile phone does not display a new interface. When the user taps the "Album" icon, the interface of the mobile phone may display a new interface, for example, the GUI shown in FIG. 6(d).

It should be noted that, in some possible implementations, the GUI shown in FIG. 6(c) is an optional interface. In other words, after the mobile phone detects the operation that the user taps the icon 802, the GUI shown in FIG. 6(d) may be directly displayed.

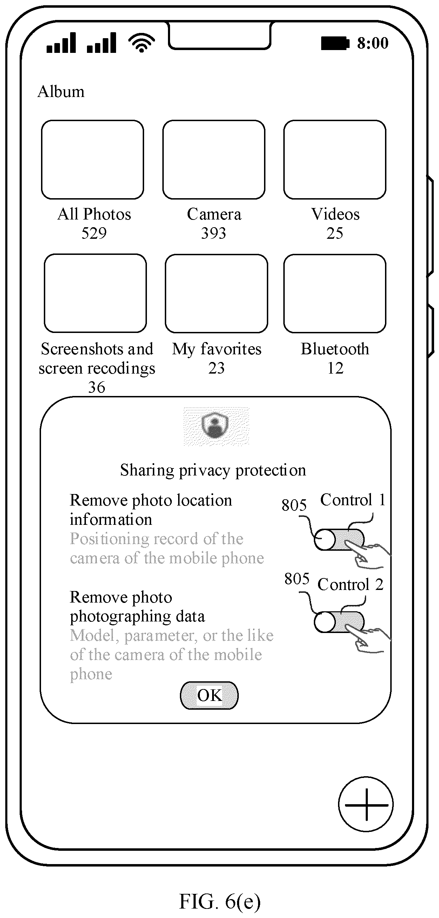

Refer to the GUI shown in FIG. 6(d). The interface displays the main interface (xxxxxxxxxxxxxxxxxxxxxxx shown in the figure) of the application 1, and displays, in the main interface, a pop-up window for applying for the permission to access the picture in the mobile phone. Content in the pop-up window includes: "'Application 1' wants to access your photo. Obtain the permission to access your picture, for accessing a picture, video, or the like. Allow authorization". If the user taps an "Allow" icon, the application 1 may obtain the permission to access the picture in the mobile phone. If the user taps a "Deny" icon, the application 1 cannot obtain the permission to access the picture in the mobile phone. After the mobile phone detects an operation that the user taps the "Deny" icon, the pop-up window for applying for the permission to access the picture in the mobile phone automatically disappears, and the interface displays the main interface of the application 1. After the mobile phone detects an operation that the user taps the "Allow" icon 804, a GUI shown in FIG. 6(e) may be displayed.

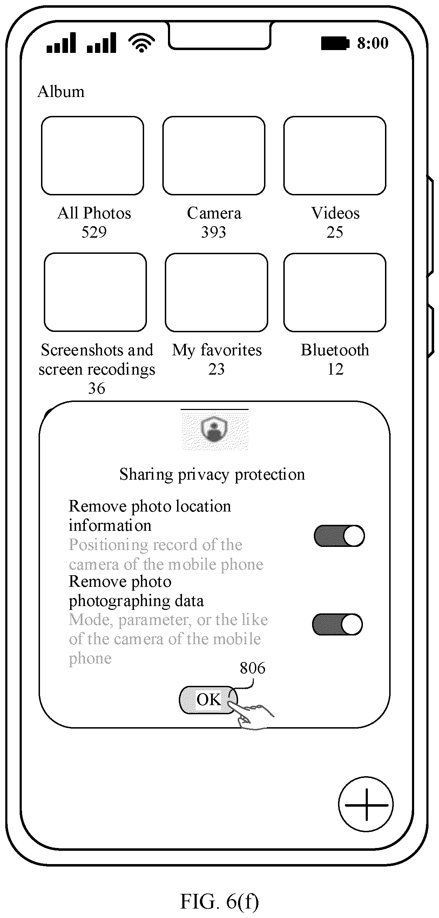

Refer to the GUI shown in FIG. 6(e). The interface displays all photos in the album of the mobile phone, and classifies the photos, including: All photos, Camera, Videos, Screenshots and screen recordings, My favorites, and the like. In addition, the interface further displays a pop-up window for protecting user privacy. Content in the pop-up window includes sharing privacy protection, mainly including: removing photo location information (for example, positioning information of a camera of the mobile phone), and a control 1 for controlling the photo location information; and removing photo photographing data (for example, a model and a parameter of the camera of the mobile phone), and a control 2 for controlling the photo photographing data. The user may control, through the control 1, whether the application 1 can obtain the photo location information. If a circle in the control 1 is located on a left side of the control 1, it indicates that the application 1 can obtain the photo location information. If the circle in the control 1 is located on a right side of the control 1, it indicates that the application 1 cannot obtain the photo location information. Similarly, the user may control, through the control 2, whether the application 1 can obtain the photo photographing data. If a circle in the control 2 is located on a left side of the control 2, it indicates that the application 2 can obtain the photo photographing data. If a circle in the control 2 is located on a right side of the control 2, it indicates that the application 1 cannot obtain the photo photographing data. The circle in the control 1 displayed in the current interface is located on the left side of the control 1, and the circle in the control 2 is located on the left side of the control 2. After detecting an operation performed by the user to slide the circle 805 of the control 1 to the right side of the control 1 and an operation performed by the user to slide the circle 805 of the control 2 to the right side of the control 2, the mobile phone may display a GUI shown in FIG. 6(f).

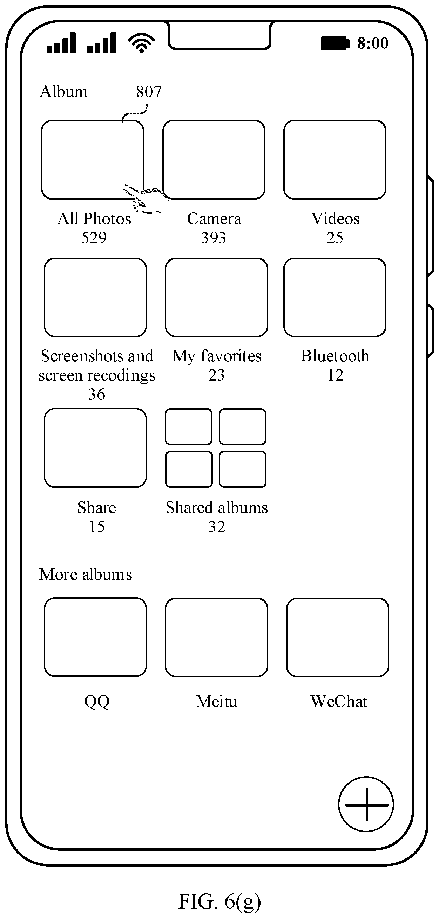

Refer to the GUI shown in FIG. 6(f). It can be learned that the circle in the control 1 is located on the right side of the control 1, and the circle in the control 2 is located on a right side of the control 2, it indicates that the application 1 cannot obtain the photo location information and the photo photographing data. After the mobile phone detects an operation that the user taps an "OK" icon 806, a GUI shown in FIG. 6(g) may be displayed.

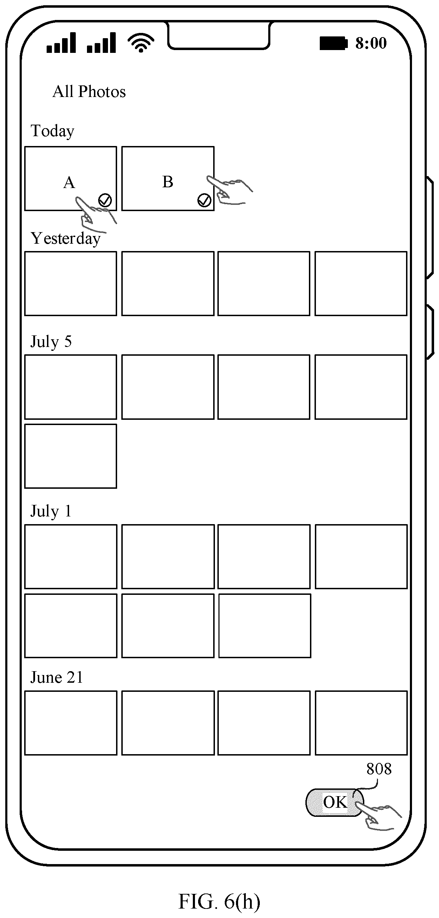

Refer to the GUI shown in FIG. 6(g). The interface displays all photos in the album of the mobile phone, and classifies the photos, including: All photos, Camera, Videos, Screenshots and screen recordings, and the like. The user may tap any icon to view a photo that the user wants to access. After the mobile phone detects an operation that the user taps an "All photos" icon 807, a GUI shown in FIG. 6(h) may be displayed.

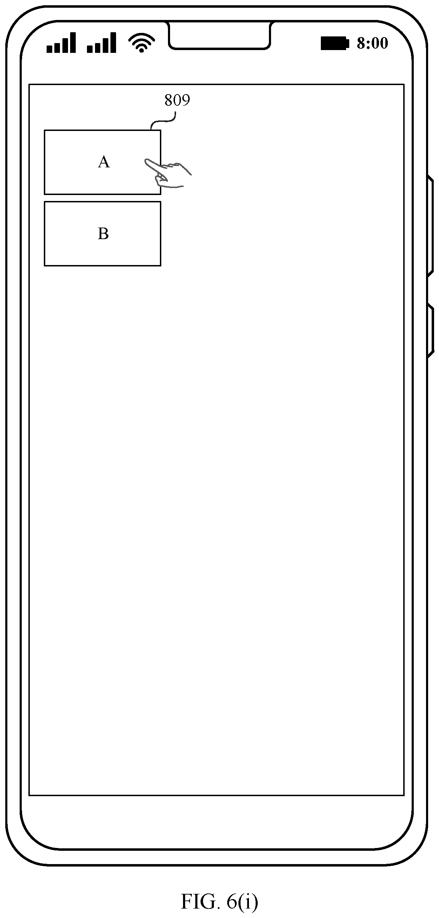

Refer to the GUI shown in FIG. 6(h). The interface displays all photos in the album, and the user may select and view some photos from all the photos. If the user selects a picture A and a picture B, icons appear in lower right corners of the picture A and the picture B. It indicates that the user wants to view the two pictures. Then, the user may further tap an "OK" icon in a lower right corner of the interface. After the mobile phone detects an operation that the user taps the "OK" icon 808, a GUI shown in FIG. 6(i) may be displayed.

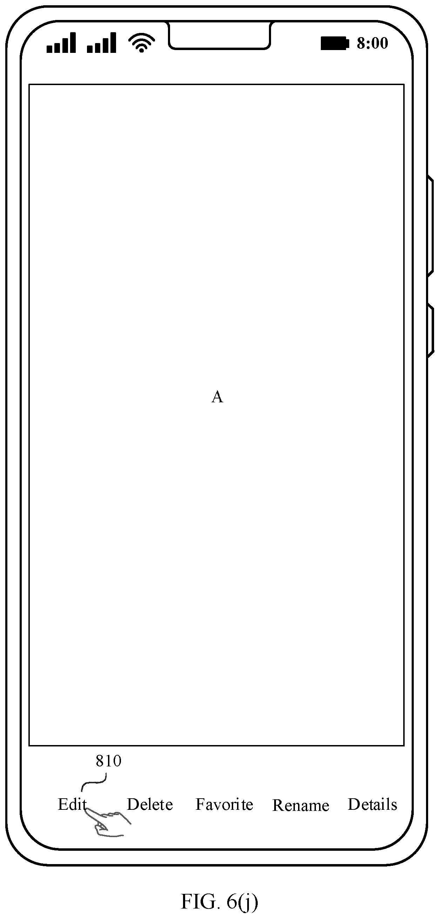

Refer to the GUI shown in FIG. 6(i). The figure shows the picture A and the picture B. In this case, the user may separately tap the picture A and the picture B to view the pictures. After the mobile phone detects an operation that the user taps an icon 809 of the picture A, a GUI shown in FIG. 6(j) may be displayed.

Refer to the GUI shown in FIG. 6(j). The interface displays the picture A, and a lower part of the interface further includes some controls, such as Edit, Delete, Favorites, Rename, and Details. The user may perform a further operation on the picture A. After the mobile phone detects an operation that the user taps an "Edit" icon 810, a GUI shown in FIG. 6(k) may be displayed.

It should be noted that, because the application market reviews that the application 1 has a permission to apply for writing a picture/video and grants the certificate that the application 1 can apply for a permission to write a picture/video, after the mobile phone detects an operation that the user taps the "Edit" icon 810, a GUI shown in FIG. 6(k) may be displayed.

Refer to the GUI shown in FIG. 6(k). In addition to displaying the picture A and some controls, the interface further displays a pop-up window for applying for a permission to edit and delete a photo in the mobile phone and a permission to create a photo in the mobile phone. Content in the pop-up window includes: "'Application 1' wants to edit and delete your photo, and create a photo. Obtain the permission to edit, delete, and create the photo, for editing, deleting, and creating a photo, a video, or the like. Allow authorization". If the user taps an "Allow" icon, the application 1 may obtain the permission to edit and delete the photo in the mobile phone and the permission to create the photo in the mobile phone. If the user taps a "Deny" icon, the application 1 cannot obtain the permission to edit or delete the photo in the mobile phone and the permission to create the photo in the mobile phone. After the mobile phone detects an operation that the user taps the "Deny" icon, the pop-up window for applying for the permission to edit or delete the photo in the mobile phone and applying for the permission to create the photo automatically disappears, and the interface displays the picture A. After the mobile phone detects an operation that the user taps the "Allow" icon 811, the GUI shown in FIG. 6(j) may be displayed. In this case, the user may perform a further operation on the picture A based on these controls.

In this embodiment of this application, FIG. 6(a) to FIG. 6(k) show the diagrams of the GUIs in which the management application accesses, edits, deletes, and creates the picture/video. It can be learned that when the user accesses the picture/video in the mobile phone through the management application, because the permission certificate of the application includes the permission to apply for reading and writing the picture/video, the application may apply, through the pop-up window, to the user for the permission to access the picture/video in the mobile phone. If the application obtains the permission to access the picture/video in the mobile phone, when the user needs to perform the further operation on the accessed picture, because the permission certificate of the application includes the permission to apply for writing the picture/video, the application may apply, through the pop-up window, to the user for the permission to edit, delete, and create the picture/video. In other words, in this embodiment of this application, the management application displays a pop-up window according to a requirement of the management application, and a file applied for in the pop-up window includes a type of file. However, in the conventional technology, an application applies for all files on a disk through a pop-up window, including a picture/video, an audio, and a document.

Certainly, in some possible implementations, the response condition for the application to apply the permission through the pop-up window is not limited to that shown in FIG. 6(a) to FIG. 6(k). For example, a response condition for the application to apply, through a pop-up window, for the permission to access the picture in the mobile phone may be a time at which the application is started, and a response condition for the application to apply, through the pop-up window, for the permission to edit, delete, or create the photo may be a time at which the permission that is applied for by the application to access the picture in the mobile phone is allowed. This is not limited.

It should be noted that an action of triggering the application to apply for the permission through the pop-up window may be determined by a developer when the developer develops the application. In some possible implementations, the action of triggering the application to apply for the permission through the pop-up window may be performed after any other possible step.

FIG. 7(a) to FIG. 7(g) show another group of GUIs of the mobile phone. FIG. 7(a) to FIG. 7(g) show a method for accessing an audio in the mobile phone by an application 2 on the mobile phone, and the application 2 is a management application. It is assumed that when a developer develops the application 2, a permission that is submitted to an application market and that the application 2 is capable of applying for is reading and writing an audio, and the application market reviews that the application 2 has the permission to apply for reading and writing the audio, and grants the application 2 a certificate for applying for the permission to read and write the audio.

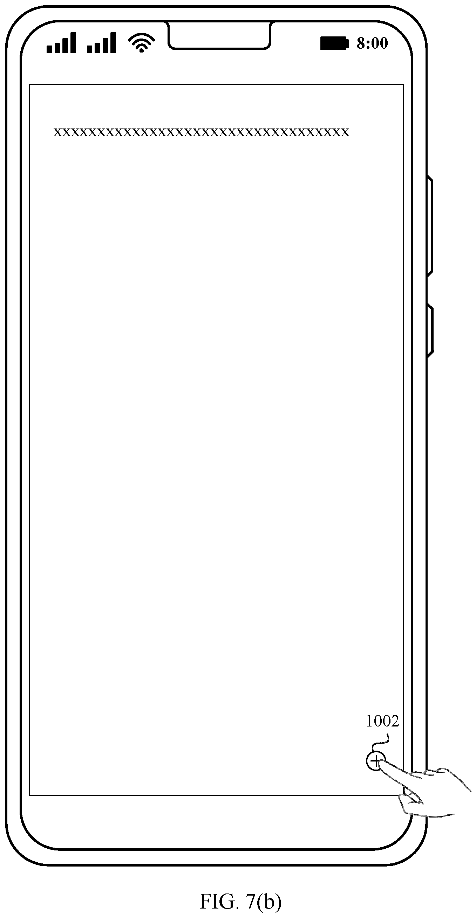

Refer to a GUI shown in FIG. 7(a). The GUI is a desktop of the mobile phone. After the mobile phone detects an operation that a user taps an "Application 2" icon 1001 on the desktop, the application 2 may be started, and a GUI shown in FIG. 7(b) is displayed. The GUI may be referred to as an access preparation interface.

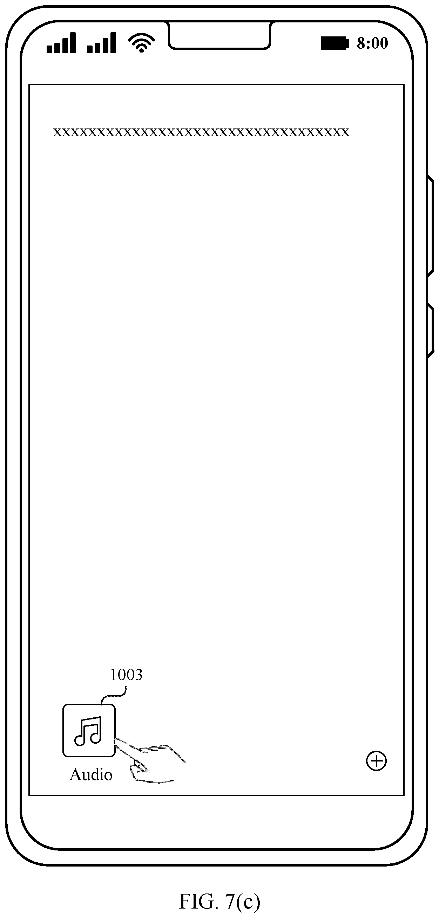

Refer to the GUI shown in FIG. 7(b). The interface displays a main interface of the application 2 (for example, xxxxxxxxxxxxxxxxxxxxxxx shown in the figure). In addition, a lower right corner of the main interface of the application 2 includes an icon. After the mobile phone detects an operation that the user taps the icon 1002, a GUI shown in FIG. 7(c) may be displayed.

Refer to the GUI shown in FIG. 7(c). The interface displays the main interface of the application 2. In addition, a lower left corner of the main interface of the application 2 includes an "Audio" icon. After the mobile phone detects an operation that the user taps the "Audio" icon 1003, a GUI shown in FIG. 7(d) may be displayed.

Similarly, in some possible implementations, the GUI shown in FIG. 7(c) is an optional interface. In other words, after the mobile phone detects an operation that the user taps the icon 1002, a GUI shown in FIG. 7(d) may be directly displayed.

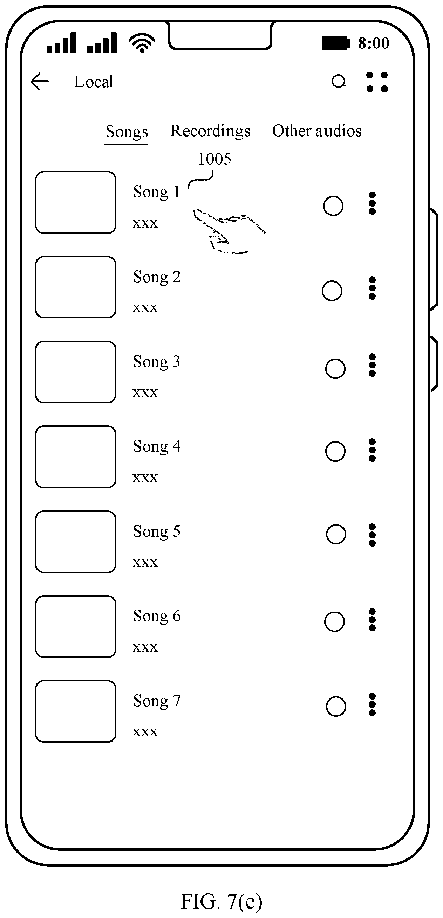

Refer to the GUI shown in FIG. 7(d). The interface displays the main interface (for example, xxxxxxxxxxxxxxxxxxxxxxx shown in the figure) of the application 2, and displays, in the main interface, a pop-up window for applying for obtaining a permission to access the audio in the mobile phone. Content in the pop-up window includes: "'Application 2' wants to access your audio. Obtain the permission to access your audio, for accessing a song, a recording, or the like. Allow authorization". If the user taps an "Allow" icon, the application 2 may obtain the permission to access the audio in the mobile phone. If the user taps a "Deny" icon, the application 2 cannot obtain the permission to access the audio in the mobile phone. After the mobile phone detects an operation that the user taps the "Deny" icon, the pop-up window for obtaining the permission to access the audio in the mobile phone automatically disappears, and the interface displays the main interface of the application 2. After the mobile phone detects an operation that the user taps the "Allow" icon 1004, a GUI shown in FIG. 7(e) may be displayed.

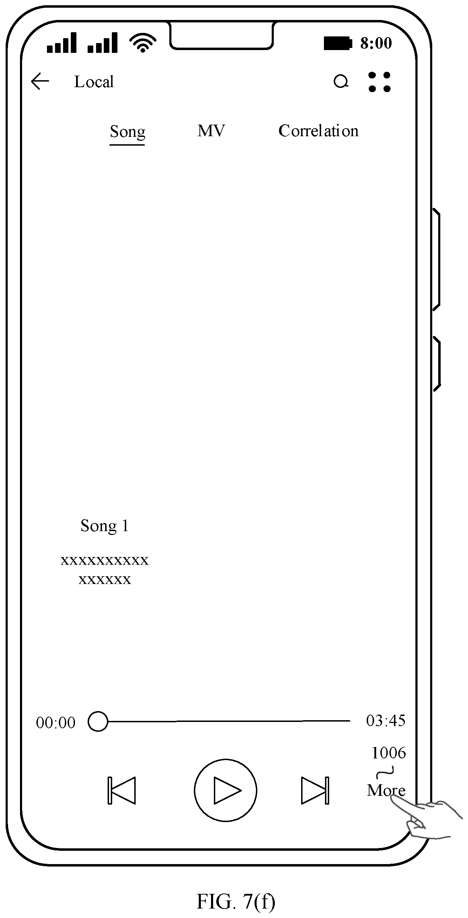

Refer to the GUI shown in FIG. 7(e). The figure shows all audios in the mobile phone, including songs, recordings, other audios, and the like. Audios displayed in the current interface are songs, and the user may tap an icon of any song to play the song that the user wants to listen to. After the mobile phone detects an operation that the user taps a "Song 1" icon 1005, a GUI shown in FIG. 7(f) may be displayed.

Refer to the GUI shown in FIG. 7(f). The figure shows information related to the song 1, and a "More" control is displayed in a lower right corner of the interface. The user may tap the "More" control to perform a further operation on the song 1. After the mobile phone detects an operation that the user taps the "More" control 1006, a GUI shown in FIG. 7(g) may be displayed.

Refer to the GUI shown in FIG. 7(g). The figure shows information related to the song 1, and a pop-up window for applying for a permission to edit and delete an audio in the mobile phone and a permission to create an audio in the mobile phone is displayed in the interface. Content in the pop-up window includes: "'Application 2' wants to edit and delete your audio, and create an audio. Obtain the permission to edit, delete, and create the audio, for editing, deleting, and creating a song, a recording, or the like. Allow authorization". If the user taps an "Allow" icon, the application 2 may obtain the permission to edit and delete the audio in the mobile phone and the permission to create the audio in the mobile phone. If the user taps a "Deny" icon, the application 2 cannot obtain the permission to edit or delete the audio in the mobile phone and the permission to create the audio in the mobile phone. After the mobile phone detects an operation that the user taps the "Deny" icon, the pop-up window for applying for the permission to edit or delete the audio in the mobile phone and applying for the permission to create the audio automatically disappear, and the interface displays the information related to the song 1. After the mobile phone detects an operation that the user taps the "Allow" icon 1007, the GUI shown in FIG. 7(f) may be displayed. In this case, the user may perform a further operation on the song 1, for example, secondary creation, lyric adjustment, or sound effect setting.

In this embodiment of this application, FIG. 7(a) to FIG. 7(g) show the diagrams of GUIs in which the management application accesses, edits, deletes, and creates the audio. It can be learned that when the user accesses the audio in the mobile phone through the management application, because the permission certificate of the application includes the permission to apply for reading the audio, the application may apply, through the pop-up window, to the user for the permission to access the audio in the mobile phone. If the application obtains the permission to access the audio in the mobile phone, when the user needs to perform the further operation on the accessed audio, because the permission certificate of the application includes that the application has the permission to apply for writing the audio, the application may apply, through the pop-up window, to the user for the permission to edit, delete, and create the audio. However, in the conventional technology, an application applies for all files on a disk through a pop-up window, including a picture/video, an audio, and a document.

FIG. 8(a) to FIG. 8(g) show still another group of GUIs of the mobile phone. FIG. 8(a) to FIG. 8(g) show a method for accessing a document in the mobile phone by an application 3 on the mobile phone, and the application 3 is a management application. It is assumed that when developing the application 3, a developer submits, to an application market, that a permission that the application 3 is capable of applying for is reading and writing a document, and the application market reviews that the application 3 has the permission to apply for reading and writing the document, and grants the application 3 a certificate for applying for the permission to read and write the document.

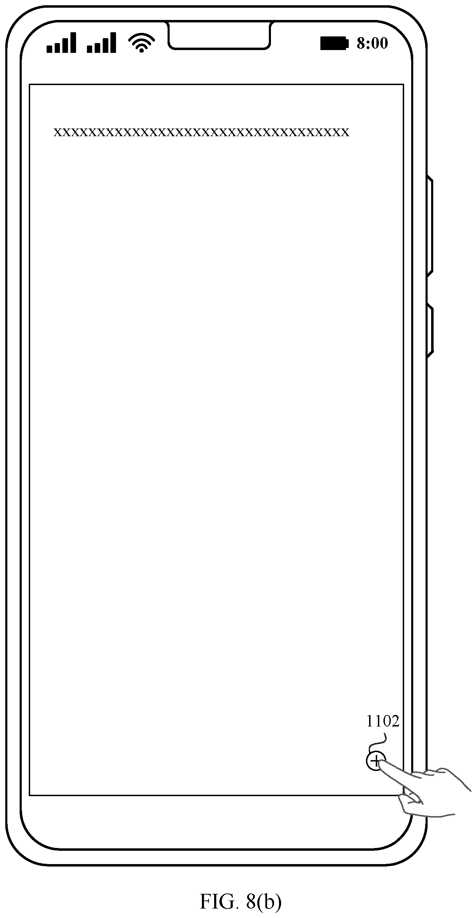

Refer to a GUI shown in FIG. 8(a). The GUI is a desktop of the mobile phone. After the mobile phone detects an operation that a user taps an "Application 3" icon 1101 on the desktop, the application 3 may be started, and a GUI shown in FIG. 8(b) is displayed. The GUI may be referred to as an access preparation interface.

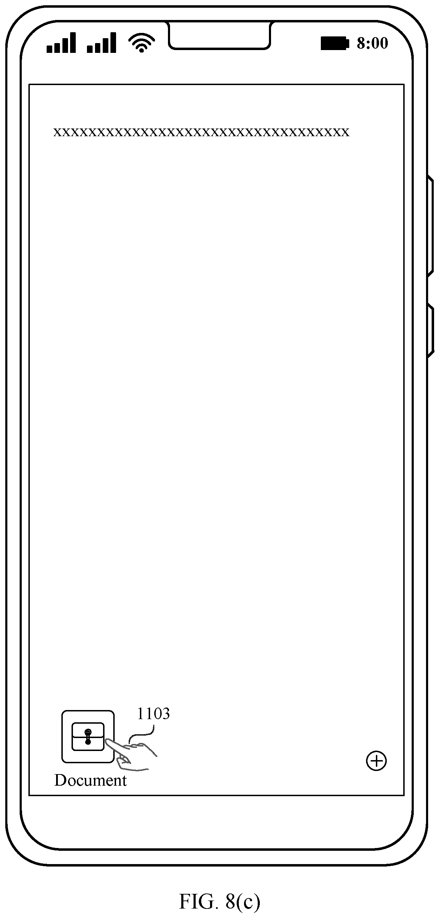

Refer to the GUI shown in FIG. 8(b). The figure shows a main interface (for example, xxxxxxxxxxxxxxxxxxxxxxx shown in the figure) of the application 3. A lower right corner of the main interface of the application 3 includes an icon. After the mobile phone detects an operation that the user taps the icon 1102, a GUI shown in FIG. 8(c) may be displayed.

Refer to the GUI shown in FIG. 8(c). The interface displays the main interface of the application 3. In addition, a lower left corner of the main interface of the application 3 includes a "Document" icon. After the mobile phone detects an operation that the user taps the "Document" icon 1103, a GUI shown in FIG. 8(d) may be displayed.

Similarly, in some possible implementations, the GUI shown in FIG. 8(c) is an optional interface. In other words, after the mobile phone detects an operation that the user taps the icon 1102, a GUI shown in FIG. 8(d) may be directly displayed.

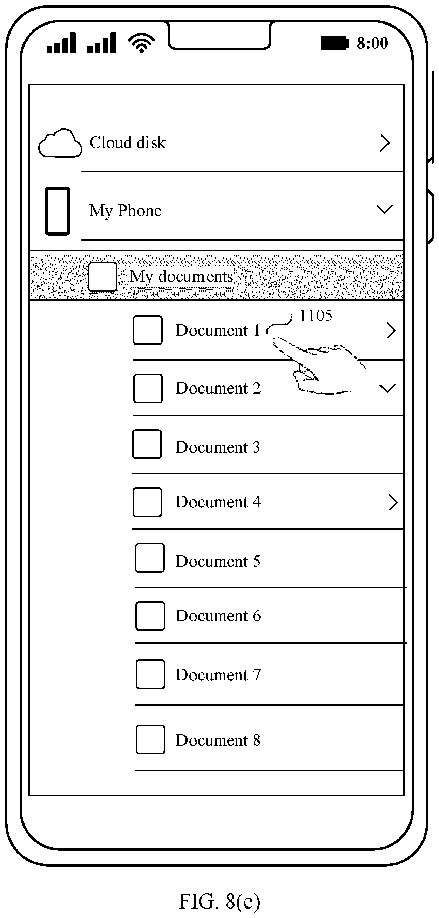

Refer to the GUI shown in FIG. 8(d). The interface displays the main interface (xxxxxxxxxxxxxxxxxxxxxxx shown in the figure) of the application 3, and displays, in the main interface, a pop-up window for applying for obtaining a permission to access a document in the mobile phone. Content in the pop-up window includes: "'Application 3' wants to access your document. Obtain the permission to access your document, for accessing a Word document, a PDF document, or the like. Allow authorization". If the user taps an "Allow" icon, the application 3 may obtain the permission to access the document in the mobile phone. If the user taps a "Deny" icon, the application 3 cannot obtain the permission to access the document in the mobile phone. After the mobile phone detects an operation that the user taps the "Deny" icon, the pop-up window for obtaining the permission to access the document in the mobile phone automatically disappears, and the interface displays the main interface of the application 3. After the mobile phone detects an operation that the user taps the "Allow" icon 1104, a GUI shown in FIG. 8(e) may be displayed.

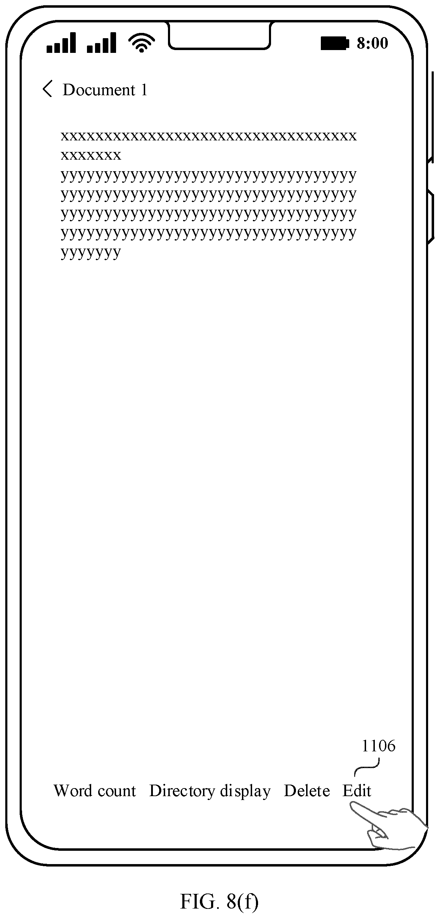

Refer to the GUI shown in FIG. 8(e). The figure shows all documents in the mobile phone. The user may tap any icon to browse a document that the user wants to view. After the mobile phone detects an operation that the user taps a "Document 1" icon 1105, a GUI shown in FIG. 8(f) may be displayed.

Refer to the GUI shown in FIG. 8(f). The interface displays content of the document 1, and a lower part of the interface further includes some controls, such as Word count, Directory display, Delete, and Edit. The user may perform a further operation on the document 1. After the mobile phone detects an operation that the user taps the "Edit" icon 1106, a GUI shown in FIG. 8(g) may be displayed.

Refer to the GUI shown in FIG. 8(g). The interface displays content of the document 1, and displays, on the interface, a pop-up window for applying for obtaining a permission to edit and delete a document in the mobile phone and a permission to create a document in the mobile phone. Content in the pop-up window includes: "'Application 3' wants to edit and delete your document, and create a document. Obtain the permission to edit, delete, and create the document, for editing, deleting, and creating a Word document, a PDF document, or the like. Allow authorization". If the user taps an "Allow" icon, the application 3 may obtain the permission to edit and delete the document in the mobile phone and the permission to create the document in the mobile phone. If the user taps a "Deny" icon, the application 3 cannot obtain the permission to edit or delete the document in the mobile phone and the permission to create the document in the mobile phone. After the mobile phone detects an operation that the user taps the "Deny" icon, the pop-up window for applying for the permission to edit or delete the document in the mobile phone and the permission to create the document in the mobile phone automatically disappears, and the interface displays the content of the document 1. After the mobile phone detects an operation that the user taps the "Allow" icon 1107, the GUI shown in FIG. 8(f) may be displayed. In this case, the user may perform a further operation on the song document 1, for example, modifying the content of the document.

In this embodiment of this application, FIG. 8(a) to FIG. 8(g) show diagrams of GUIs in which the management application accesses, edits, deletes, and creates the document. It can be learned that when the management application accesses the document in the mobile phone, because the permission certificate of the application includes that the application has the permission to apply for reading the document, the application may apply, through the pop-up window, to the user for the permission to access the document in the mobile phone. If the application obtains the permission to access the document in the mobile phone, when the application needs to perform the further operation on the accessed document, because the permission certificate of the application includes the permission that the application has the permission to apply for writing the document, the application may apply, through the pop-up window, for a permission to edit, delete, and create the document. However, in the conventional technology, an application applies for all files on a disk through a pop-up window, including a picture/video, an audio, and a document.

It may be understood that, in some embodiments, some applications may simultaneously apply for permissions to access a plurality of file categories. For example, an application may simultaneously apply for permissions to access an audio and a document. This is not limited.

In conclusion, FIG. 6(a) to FIG. 8(g) show diagrams of GUIs in which the management application accesses, edits, deletes, and creates the file. It can be learned that when the management application accesses the file in the mobile phone, the file that the application applies for in the pop-up window includes a type of file, for example, the picture/video type applied for in the pop-up windows in the GUIs shown in FIG. 6(a) to FIG. 6(k), the audio type applied for in the pop-up windows in the GUIs shown in FIG. 7(a) to FIG. 7(g), and the document type applied for in the pop-up windows in the GUIs shown in FIG. 8(a) to FIG. 8(g). However, in the conventional technology, an application applies for all files on a disk through a pop-up window, including a picture/video, an audio, and a document.

FIG. 9(a) to FIG. 9(g) show yet another group of GUIs of a mobile phone. FIG. 9(a) to FIG. 9(e) show a method for canceling, by a user, an application in the mobile phone to access a picture/video, an audio, and a document in the mobile phone.

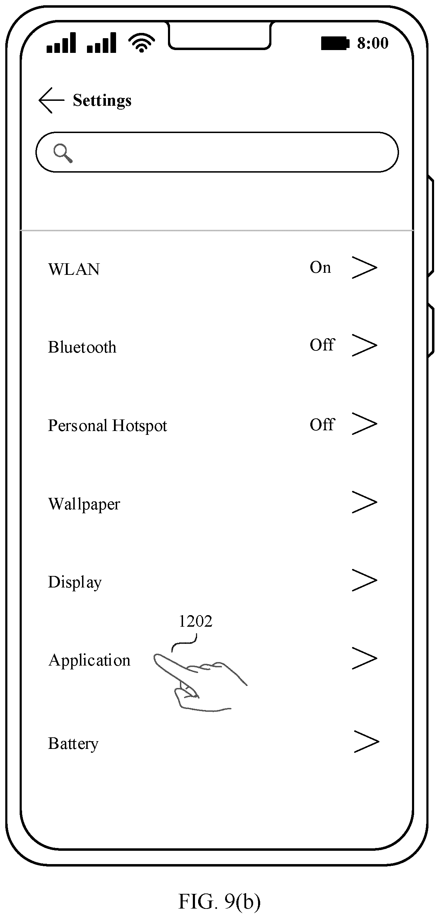

Refer to a GUI shown in FIG. 9(a). The GUI is a desktop of the mobile phone, and includes an application 1, an application 2, and an application 3. After the mobile phone detects an operation that the user taps a "Settings" icon 1201 on a desktop, this setting may be started, and a GUI shown in FIG. 9(b) is displayed. The GUI may be referred to as a setting interface.

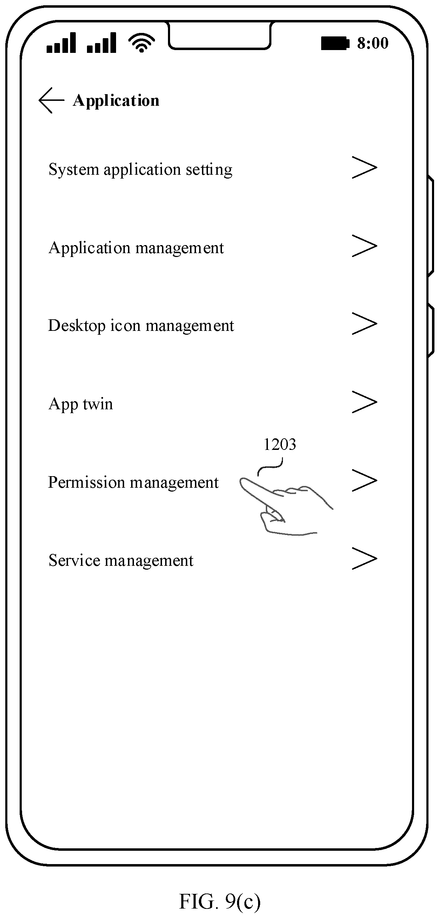

Refer to the GUI shown in FIG. 9(b). The figure shows a manner in which another device may be connected, for example, a WLAN, Bluetooth, or a personal hotspot, an application in the mobile phone, and the like. After the mobile phone detects an operation that the user taps an "Application 1" icon 1202, a GUI shown in FIG. 9(c) may be displayed.

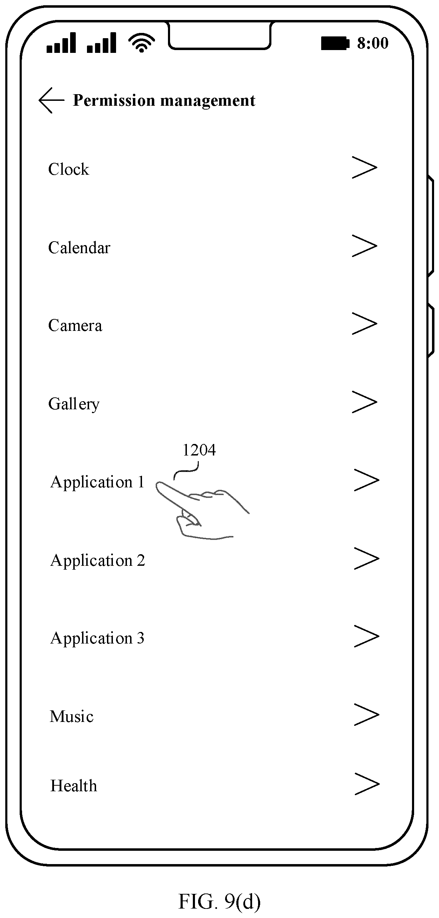

Refer to the GUI shown in FIG. 9(c). The figure shows System application setting, Application management, Desktop icon management, App twin, Permission management, Service management, and the like. The permission management is to manage a permission of an application in the mobile phone. After the mobile phone detects an operation that the user taps a "Permission management" icon 1203, a GUI shown in FIG. 9(d) may be displayed.

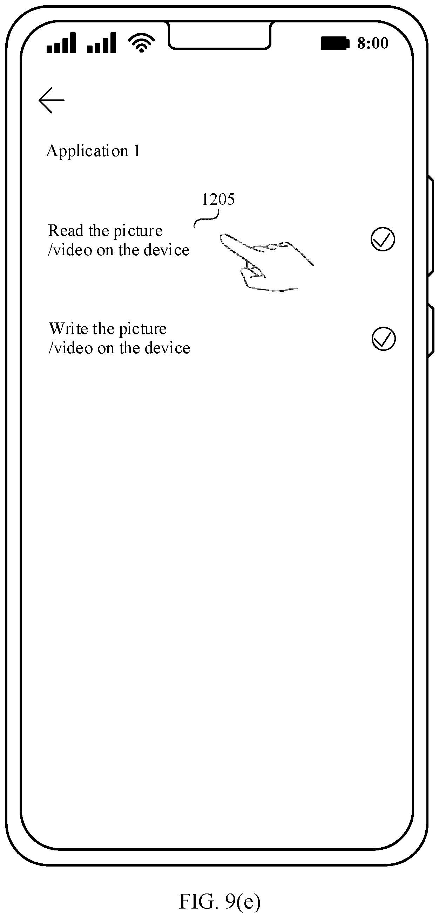

Refer to the GUI shown in FIG. 9(d). The figure shows a plurality of applications such as Clock, Calendar, Camera, Gallery, Application 1, Application 2, and Application 3. After the mobile phone detects an operation that the user taps an "Application 1" icon 1204, a GUI shown in FIG. 9(e) may be displayed.

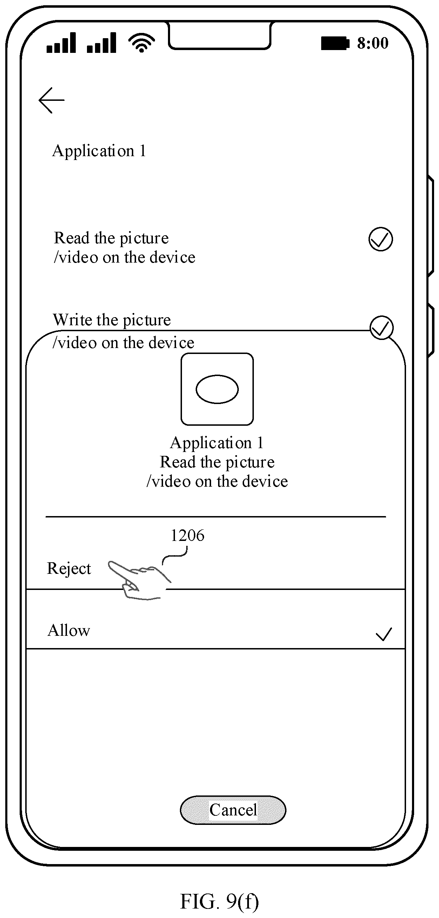

Refer to the GUI shown in FIG. 9(e). The figure shows that the application 1 reads a picture/video on the device, and there is an icon on the right side of the line of text, indicating that the application 1 has the permission to read and write the picture/video on the device; and shows that the application 1 writes the picture/video on the device, and there is an icon on the right side of the line of text, indicating that the application 1 has the permission to write the picture/video on the device. If the user wants to cancel the permission of the application 1 to read or write the picture/video on the device, the user may perform setting again. After the mobile phone detects an operation that the user taps a "Read the picture/video on the device" icon 1205, a GUI shown in FIG. 9(f) may be displayed.

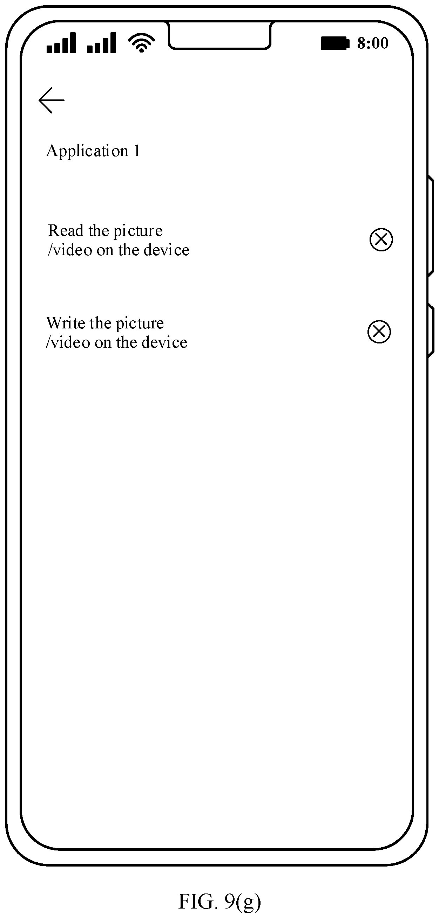

Refer to the GUI shown in FIG. 9(f). The figure shows a pop-up window. Content in the pop-up window includes: "Application 1. Read the picture/video on the device", and there are two options below the line of text: "Reject" and "Allow". If the user taps "Allow", it indicates that the application 1 is allowed to read the picture/video on the device. If the user taps "Reject", it indicates that the application 1 is not allowed to read the picture/video on the device. After the mobile phone detects an operation that the user taps the "Reject" icon 1206, a GUI shown in FIG. 9(g) may be displayed.

Refer to the GUI shown in FIG. 9(g). The figure shows that the application 1 reads the picture/video on the device, and there is an icon on the right side of the line of text, indicating that the application 1 does not have the permission to read the picture/video on the device; and shows the application 1 writes the picture/video on the device, and there is an icon on the right side of the line of text, indicating that the application 1 does not have the permission to write the picture/video on the device.

It should be noted that, when the user taps "Reject" for "The application 1 reads the picture/video on the device", correspondingly, the permission of the application 1 to write the picture/video on the device is automatically canceled.

It should be further noted that, if the user taps "Write the picture/video on the device" in the GUI shown in FIG. 9(e), modifying the permission of the application 1 to write the picture/video on the device does not affect the permission of the application 1 to read the picture/video on the device. In other words, when the user chooses to reject the permission of the application 1 to write the picture/video on the device, the application 1 can still retain the permission to read the picture/video on the device.

Similarly, for the application 2 and the application 3, corresponding permissions may also be canceled according to similar operations. Details are not described herein again.

FIG. 10(a) to FIG. 10(i) show yet another group of GUIs of a mobile phone. FIG. 10(a) to FIG. 10(i) show a method for accessing a file in the mobile phone by an application 4 in the mobile phone. The application 4 is a non-management application.

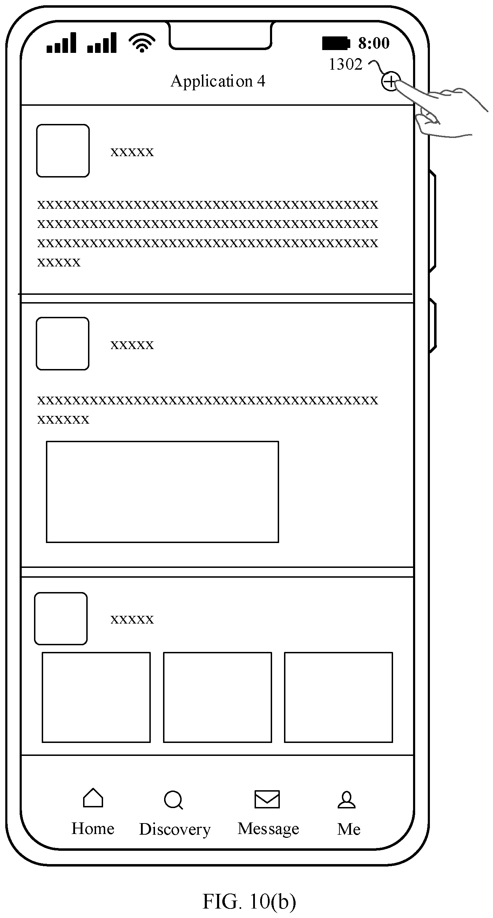

Refer to a GUI shown in FIG. 10(a). The GUI is a desktop of the mobile phone. After the mobile phone detects an operation that a user taps an icon 1301 of the application 4 on the desktop, the application 4 may be started, and a GUI shown in FIG. 10(b) is displayed. The GUI may be referred to as a main interface of the application 4.

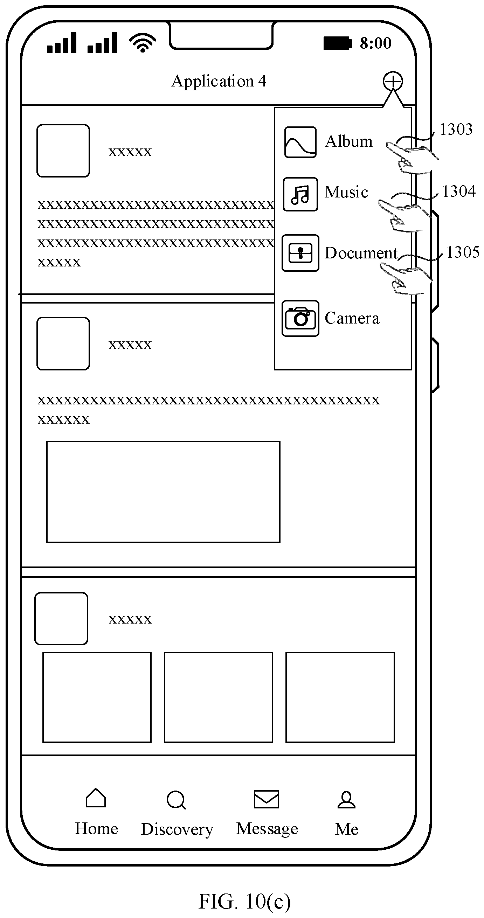

Refer to the GUI shown in FIG. 10(b). The figure shows the main interface of the application 4. An icon is displayed in an upper right corner of the main interface. After the mobile phone detects an operation that the user taps the icon 1302, a GUI shown in FIG. 10(c) may be displayed.

Refer to the GUI shown in FIG. 10(c). It can be learned that a pop-up window is displayed in the main interface of the application 3, and the pop-up window includes: Album, Music, Document, Camera, and the like. The user may tap any icon, and the application 4 displays a different interface based on the icon tapped by the user.

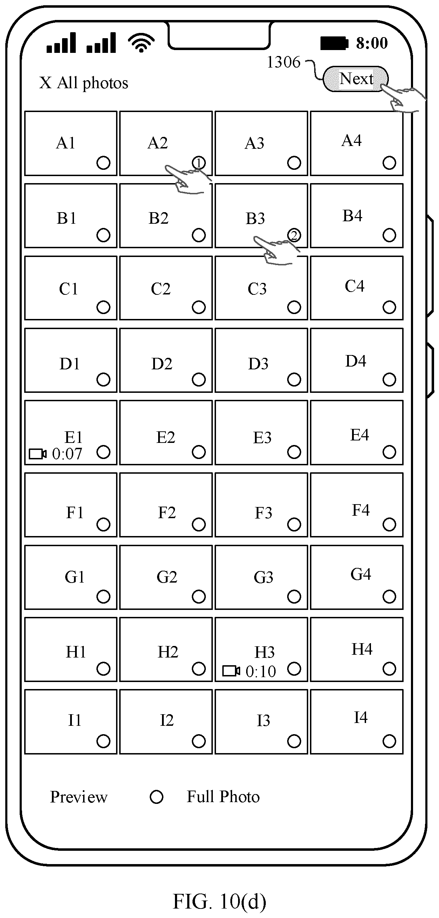

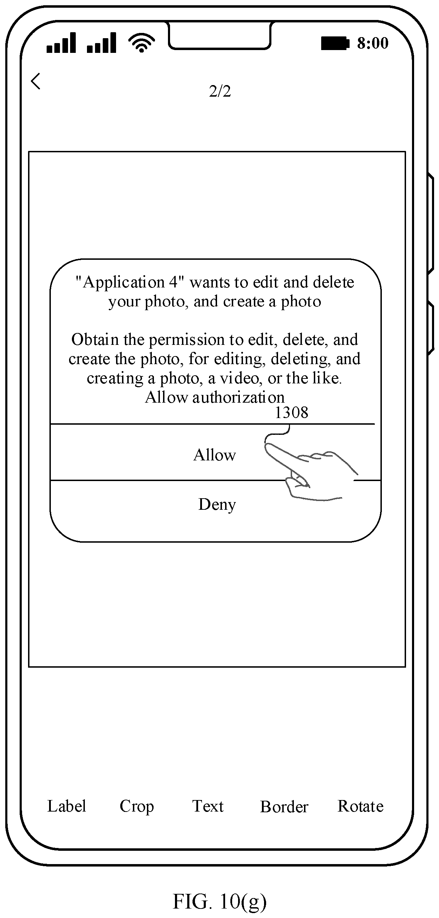

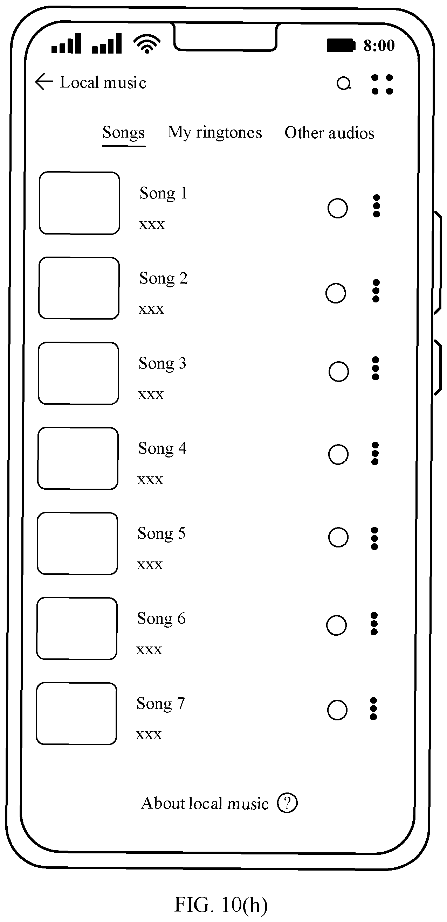

For example, after the mobile phone detects an operation that the user taps an "Album" icon 1303, a GUI shown in FIG. 10(d) may be displayed. After the mobile phone detects an operation that the user taps a "Music" icon 1304, a GUI shown in FIG. 10(g) may be displayed. After the mobile phone detects an operation that the user taps a "Document" icon 1305, a GUI shown in FIG. 10(h) may be displayed.

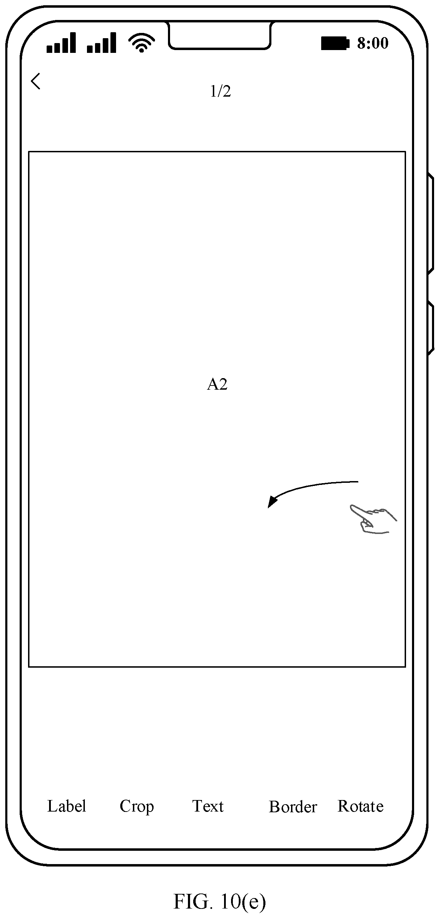

Refer to the GUI shown in FIG. 10(d). The interface displays all photos in the mobile phone, and these photos are arranged in a specific sequence, for example, may be arranged based on photographing time. The user may select photos from all the photos for viewing. If the user selects a picture A2 and a picture B3, a number appears in ∘ at a lower right corner of the picture A2 and a lower right corner of the picture B3, where the number indicates a sequence of selecting the photos. After the mobile phone detects an operation that the user taps a "Next step" icon 1306, a GUI shown in FIG. 10(e) may be displayed.

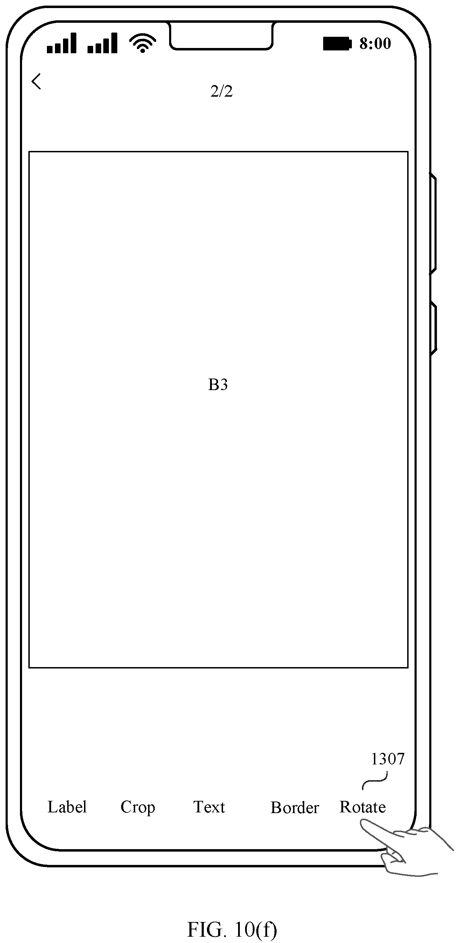

Refer to the GUI shown in FIG. 10(e). The interface displays the picture A2. In addition, the user may tap a control below the picture A2, such as Label, Crop, Text, Border, or Rotate, to perform a further operation. If the user wants to view the photo B3 selected in FIG. 10(d), the user may slide to the left with a hand. After the mobile phone detects an operation that the user slides in a direction shown in the figure, a GUI shown in FIG. 10(f) may be displayed.

Refer to the GUI shown in FIG. 10(f). The interface displays the picture B3. In addition, the user may tap a control below the picture B3, such as Label, Crop, Text, Border, or Rotate, to perform a further operation. After the mobile phone detects an operation that the user taps a "Rotate" icon 1307, a GUI shown in FIG. 10(g) may be displayed.

Refer to the GUI shown in FIG. 10(g). In addition to the picture B3 and some controls, the figure further shows a pop-up window for applying for a permission to edit and delete a photo in the mobile phone and a permission to create a photo in the mobile phone. Content in the pop-up window includes: "'Application 4' wants to edit and delete your photo, and create a photo. Obtain the permission to edit, delete, and create the photo, for editing, deleting, and creating a photo, a video, or the like. Allow authorization". If the user taps an "Allow" icon, the application 4 may obtain the permission to edit and delete the photo in the mobile phone and the permission to create the photo in the mobile phone. If the user taps a "Deny" icon, the application 4 cannot obtain the permission to edit or delete the photo in the mobile phone and the permission to create the photo in the mobile phone. After the mobile phone detects an operation that the user taps the "Deny" icon, the pop-up window for applying for the permission to edit or delete the photo in the mobile phone and applying for the permission to create the photo automatically disappear, and the interface displays the picture B3. After the mobile phone detects an operation that the user taps the "Allow" icon 1308, the GUI shown in FIG. 10(f) may be displayed. In this case, the user may perform a further operation on the picture B3 based on these controls.

Refer to the GUI shown in FIG. 10(h). The figure shows all audios in the mobile phone. The user may tap any icon to play an audio that the user wants to listen to. Songs are displayed in the current interface, and the user may tap an icon of any song to play the song that the user wants to listen to. In addition, the user may further edit an audio. Similarly, if the user wants to edit the audio, the interface of the mobile phone alternatively displays a pop-up window for applying for a permission to edit, delete, and create an audio. After tapping an "Allow" icon, the user may further edit the audio.

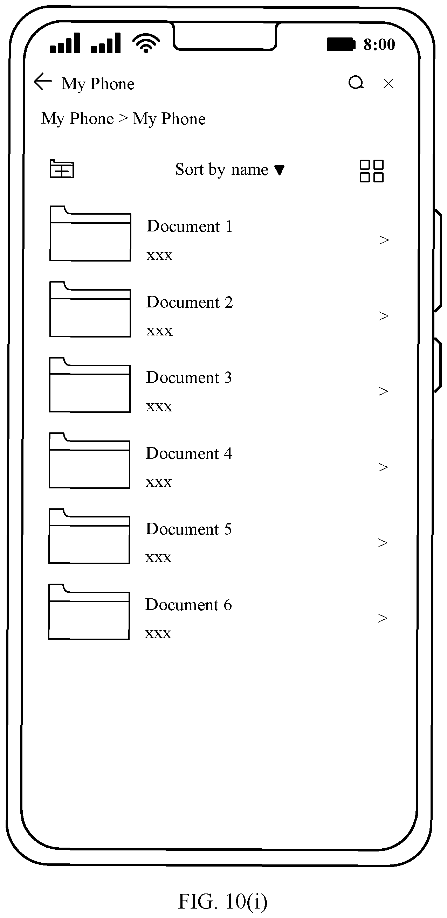

Refer to a GUI shown in FIG. 10(i). The figure shows all documents in the mobile phone. The user may tap any icon to browse a document that the user wants to view. In addition, the user may further edit the document. Similarly, if the user wants to edit the document, the interface of the mobile phone alternatively displays a pop-up window for applying for a permission to edit, delete, and create a document. After tapping an "Allow" icon, the user may further edit the document.

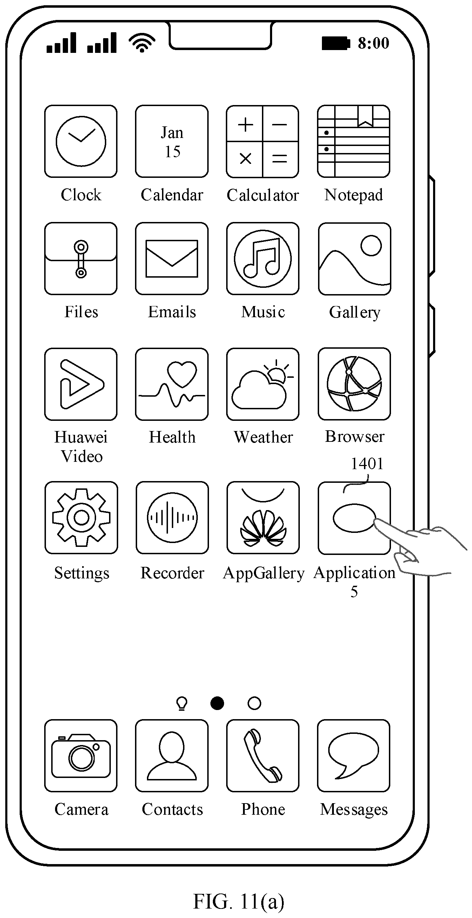

FIG. 11(a) to FIG. 11(h) show yet another group of GUIs of a mobile phone. FIG. 11(a) to FIG. 11(h) show a method for accessing a file in the mobile phone by an application 5 in the mobile phone. The application 5 is a non-management application.

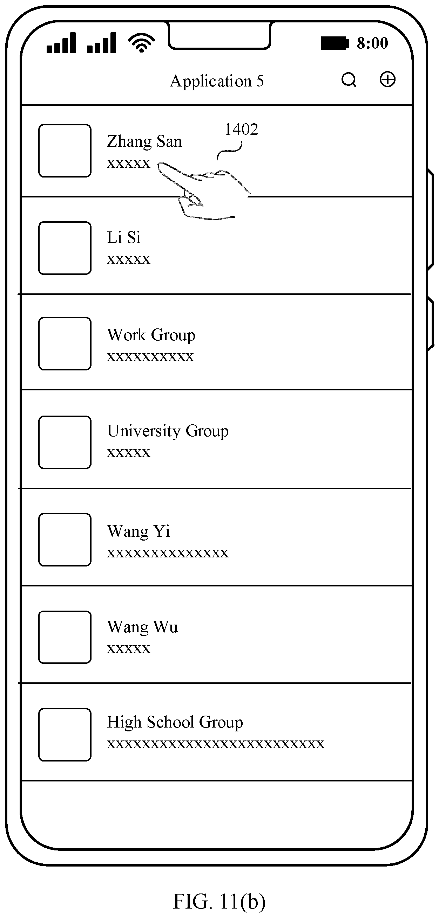

Refer to a GUI shown in FIG. 11(a). The GUI is a desktop of the mobile phone. After the mobile phone detects an operation that a user taps an icon 1401 of the application 5 on the desktop, the application 5 may be started, and a GUI shown in FIG. 11(b) is displayed. The GUI may be referred to as a main interface of the application 5.

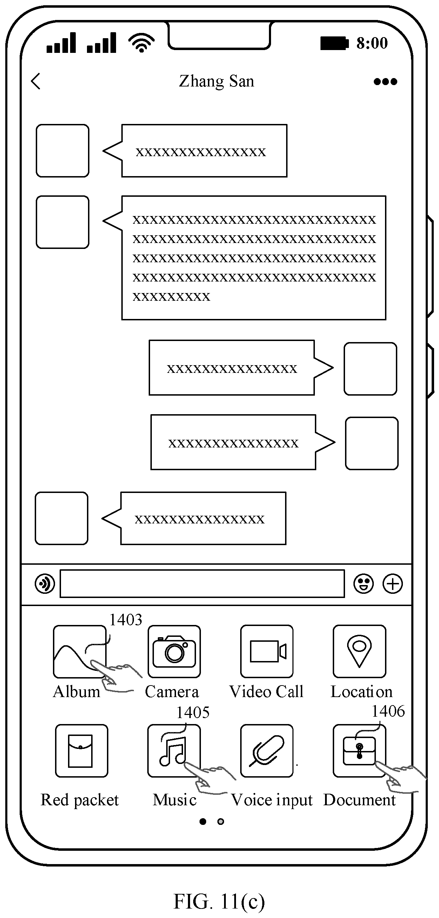

Refer to a GUI shown in FIG. 11(b). The figure shows the main interface of the application 5. The main interface of the application 5 includes a plurality of contacts, for example, Zhang San and Li Si. After the mobile phone detects an operation that the user taps an icon 1402 of the contact Zhang San, a GUI shown in FIG. 11(c) may be displayed.

Refer to the GUI shown in FIG. 11(c). It can be learned that a plurality of controls are displayed below the interface in which Zhang San is chatted with. These controls include: Album, Camera, Video Call, Location, Red Packet, Music, Voice Input, Document, and the like. The user may tap any icon, and the application 5 displays a different interface based on the icon tapped by the user.

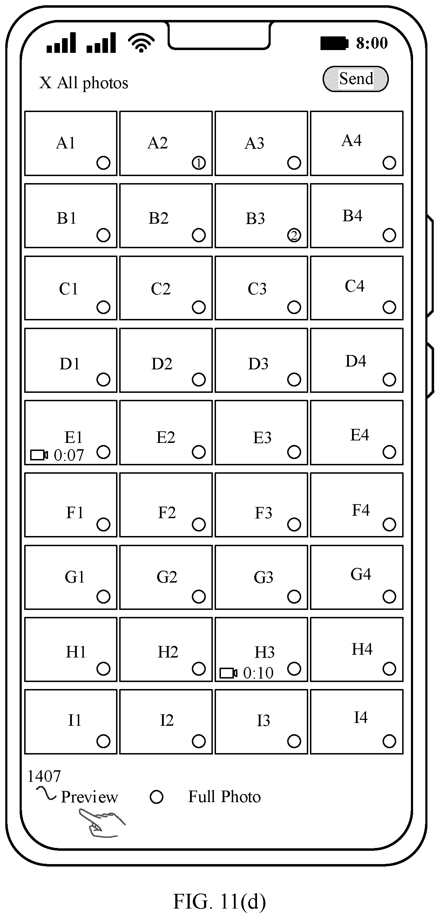

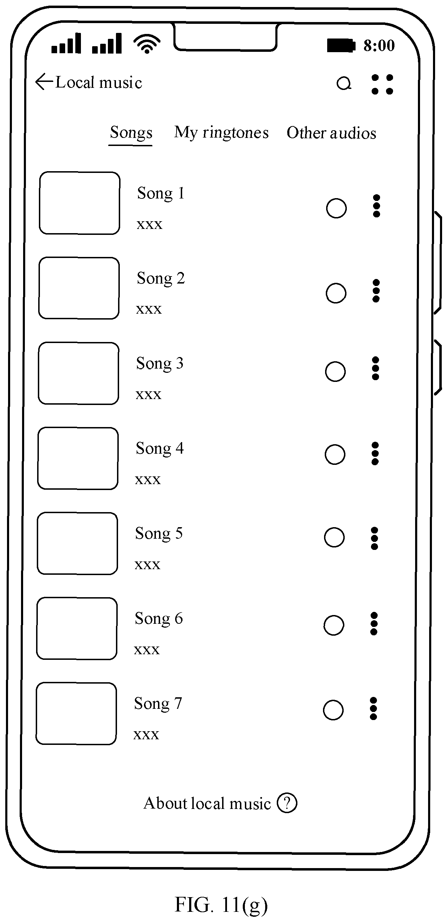

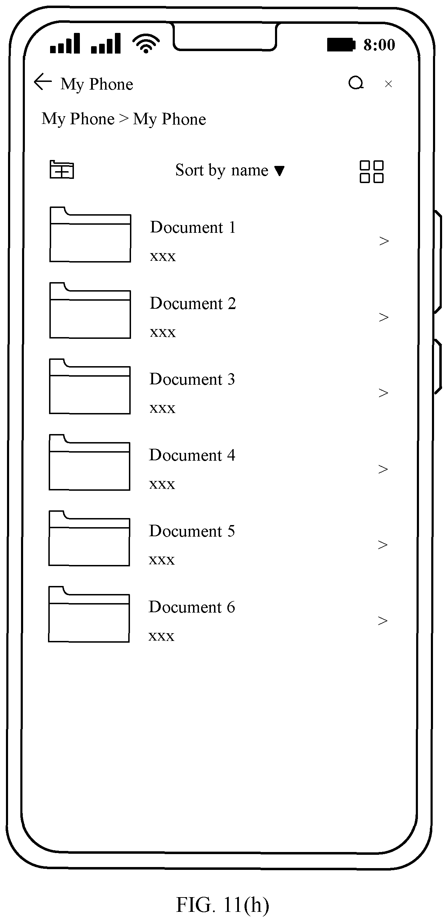

For example, after the mobile phone detects an operation that the user taps an "Album" icon 1403, a GUI shown in FIG. 11(d) may be displayed. After the mobile phone detects an operation that the user taps a "Music" icon 1404, a GUI shown in FIG. 11(g) may be displayed. After the mobile phone detects an operation that the user taps a "Document" icon 1405, a GUI shown in FIG. 11(h) may be displayed.

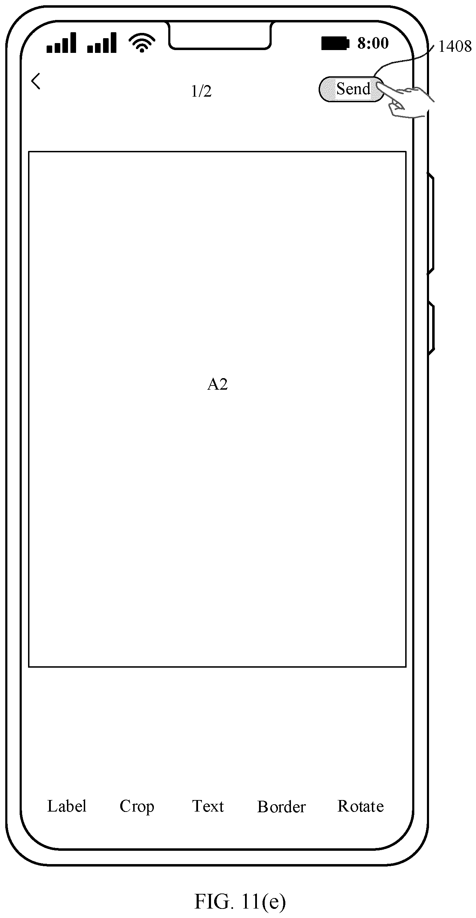

Refer to the GUI shown in FIG. 11(d). The interface displays all photos in the mobile phone, and these photos are arranged in a specific sequence, for example, may be arranged based on creation time. The user may select photos from all the photos for viewing. If the user selects a picture A2 and a picture B3, a number appears in ∘ at a lower right corner of the picture A2 and a lower right corner of the picture B3, where the number indicates a sequence of selecting the photos. The user may directly send the selected picture, or may edit the selected picture and then send a picture. After the mobile phone detects an operation that the user taps a "Preview" icon 1407, a GUI shown in FIG. 11(e) may be displayed.

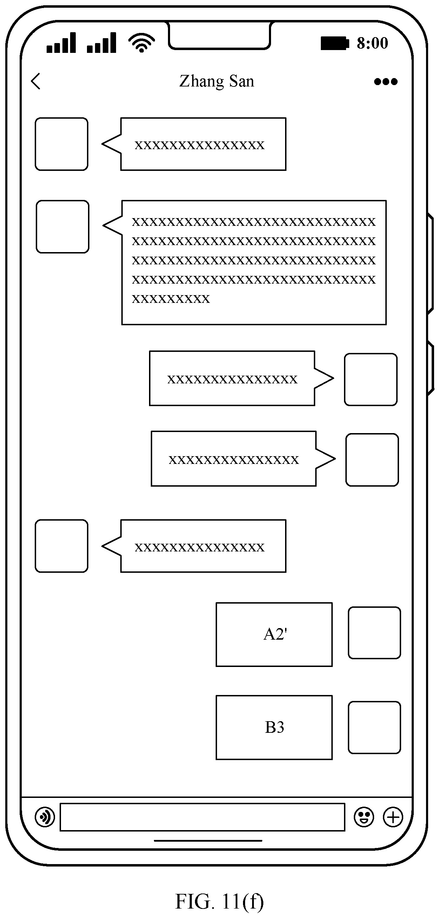

Refer to the GUI shown in FIG. 11(e). The interface displays the picture A2, and displays a plurality of controls in a lower part of the interface, such as Label, Crop, Text, Border, or Rotate. The user may further edit the picture A2, and send an edited picture. It is assumed that the user rotates the picture A2 and taps "Send". After the mobile phone detects an operation that the user taps the "Send" icon 1408, a GUI shown in FIG. 11(f) may be displayed.

Refer to the GUI shown in FIG. 11(f). A picture A2' (the picture A2' is a picture obtained after the picture A2 is rotated) and the picture B3 are displayed in a lower part of the interface in which Zhang San is chatted with. For example, if the user wants to view the picture A2', the user may tap the picture A2'; or if the user wants to view the picture B3, the user may tap the picture B3.

Refer to the GUI shown in FIG. 11(g). The figure shows all audios in the mobile phone. The user may tap any icon to send an audio that the user wants to send. Songs displayed in the current interface, and the user may tap an icon of any song to send the selected song. Certainly, in some possible implementations, the user may first edit the selected song, and send an edited song.

Refer to the GUI shown in FIG. 11(h). The figure shows all documents in the mobile phone. The user may tap any icon to send a document that the user wants to send. Certainly, in some possible implementations, the user may first edit a selected document song, and send an edited document.

In conclusion, FIG. 10(a) to FIG. 11(h) both show steps of accessing and editing the file in the mobile phone by the non-management application in the mobile phone. Different from that in FIG. 6(a) to FIG. 8(g), when the application 4 and the application 5 access the file in the mobile phone, the user does not apply to the mobile phone for obtaining the permission to access the file in the mobile phone. When starting the application 4 or the application 5, the user may directly view the file in the mobile phone, and may further edit the viewed file. However, in FIG. 10(a) to FIG. 10(i), when the user performs a further operation on the file in the mobile phone through the application 4, the interface displays the pop-up window for applying for the permission to edit, delete, and create the file. In FIG. 11(a) to FIG. 11(h), when the user performs a further operation on the file in the mobile phone through the application 5, the interface does not display the pop-up window for applying for the permission to edit, delete, or create the file. This is mainly because the user needs to store the edited file to a memory of the mobile phone through the application 4, but the user only sends the edited file to another contact through the application 5, and the edited file is not stored.

In addition, it can be further learned from FIG. 10(a) to FIG. 11(h) that, in a process in which the user obtains files in the mobile phone through the different applications, the files displayed in the interfaces of the mobile phone are sorted consistently. This is because the different applications obtain the files from a file management module through an API of a unified system picker. For example, in FIG. 10(a) to FIG. 11(h), in a process in which the user obtains the photos in the mobile phone through the application 4 and the application 5, respectively, all pictures displayed in the interface are sorted consistently. In the GUI shown in FIG. 10(d), all the photos displayed in the interface are sorted in a sequence of A1, A2, A3, A4, B1, B2, B3, B4, ..., I1, I2, I3, and I4. In the GUI shown in FIG. 11(d), all the photos displayed in the interface are also sorted in the sequence of A1, A2, A3, A4, B1, B2, B3, B4, ..., I1, I2, I3, and I4.

For another example, in FIG. 10(a) to FIG. 11(h), in a process in which the user obtains the audio in the mobile phone through the application 4 and the application 5, respectively, the songs displayed in the interface are sorted consistently. In the GUI shown in FIG. 10(h), the songs displayed in the interface are sorted in a sequence of a song 1, a song 2, a song 3, a song 4, a song 5, a song 6, and a song 7. In the GUI shown in FIG. 11(g), the songs displayed in the interface are also sorted in the sequence of the song 1, the song 2, the song 3, the song 4, the song 5, the song 6, and the song 7.

For another example, in FIG. 10(a) to FIG. 11(h), in processes in which the user obtains the documents in the mobile phone through the application 4 and the application 5, respectively, the documents displayed in the interface are sorted consistently. In the GUI shown in FIG. 10(i), the documents displayed in the interface are sorted in a sequence of a document 1, a document 2, a document 3, a document 4, a document 5, and a document 6. In the GUI shown in FIG. 11(h), the documents displayed in the interface are also sorted in the sequence of the document 1, the document 2, the document 3, the document 4, the document 5, and the document 6.

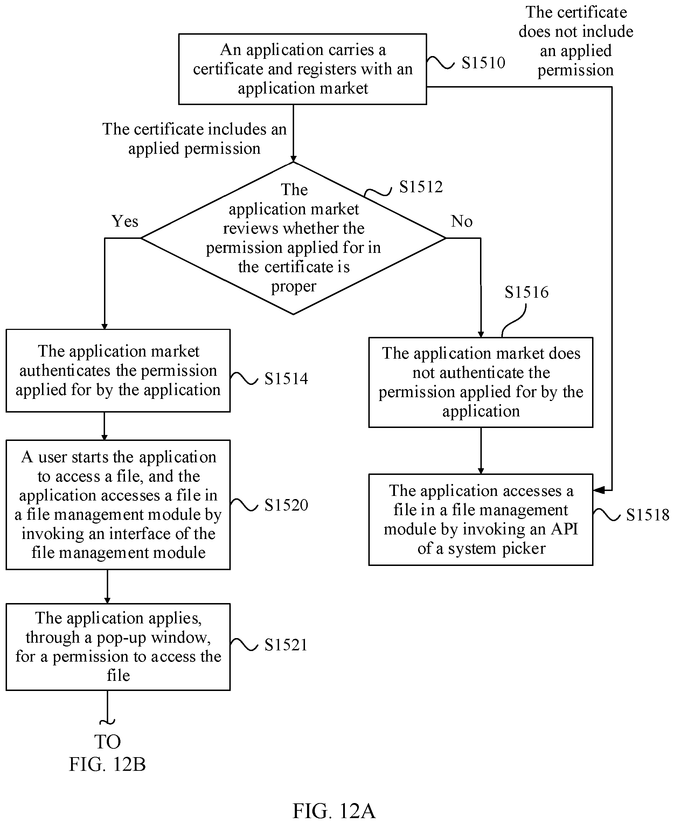

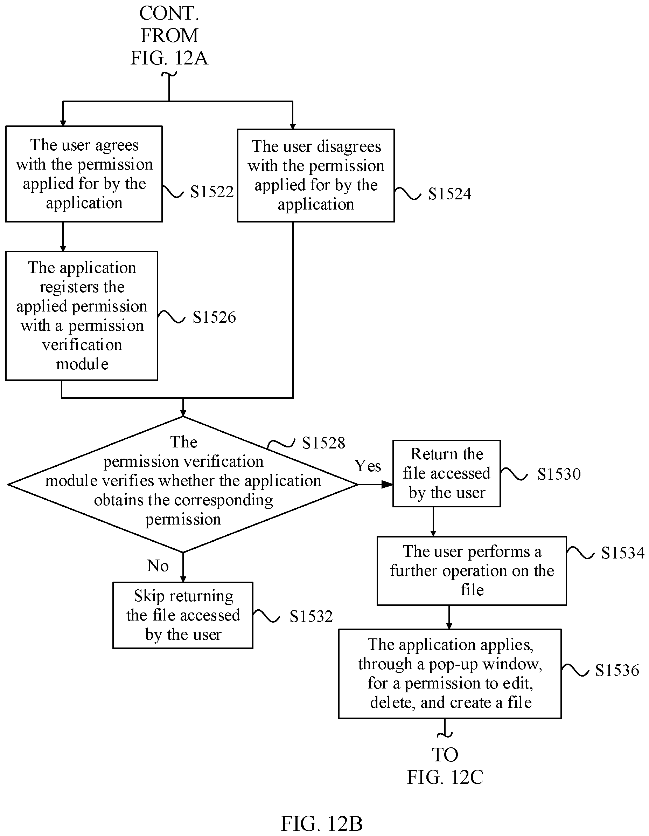

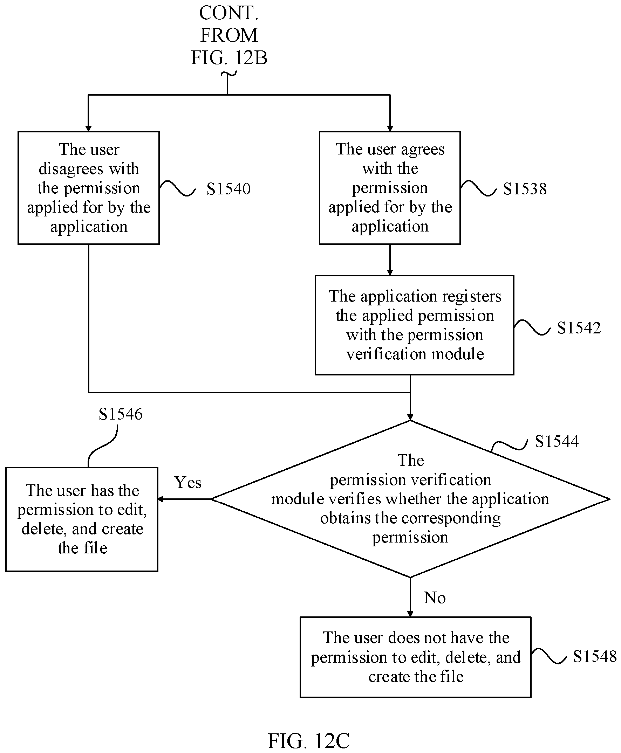

FIG. 12A to FIG. 12C are a diagram of a file management method and an application management method according to an embodiment of this application. The method may include steps S1510 to S1548.

S1510: An application carries a certificate and registers with an application market.

If the certificate includes an applied permission, step S1512 is performed. If the certificate does not include an applied permission, step S1518 is performed.

The certificate carried by the application in this embodiment of this application may include the applied permission, or may not include the applied permission. This is not limited.

In this embodiment of this application, the permission applied for in the certificate carried by the application may include one or more permissions. For example, if one permission is applied for in the certificate carried by the application, the application may carry a certificate for applying for a permission for a picture/video, or the application may carry a certificate for applying for a permission for an audio, or the application may carry a certificate for applying for a permission for a document. If two permissions are applied for in the certificate carried by the application, the application may carry a certificate for applying for permissions for a picture/video and an audio, or the application may carry a certificate for applying for permissions for a picture/video and a document, or the application may carry a certificate for applying for permissions for a document and an audio. If three permissions are applied for in the certificate carried by the application, the application may carry a certificate for applying for permissions for a picture/video, an audio, and a document.

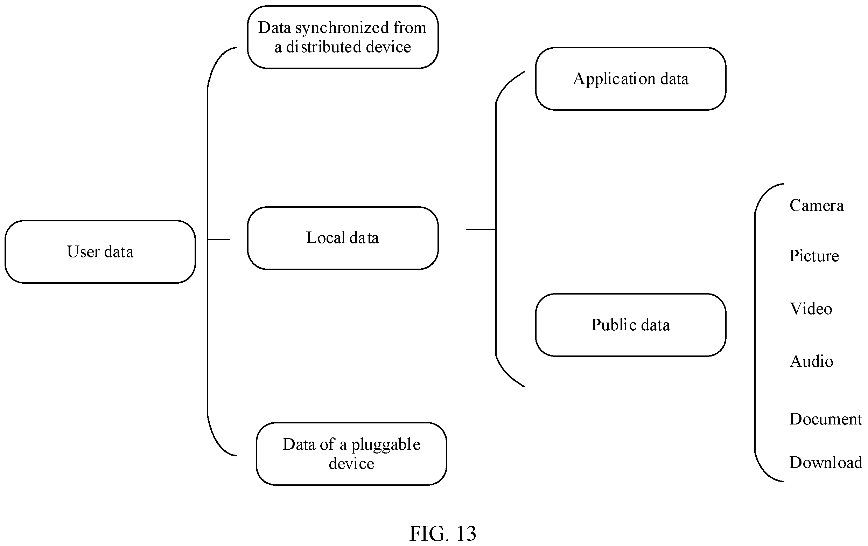

It should be noted that the picture/video, the audio, and the document in embodiments of this application are all public data. For ease of understanding, the following describes a concept of the public data with reference to FIG. 13.

It can be learned from FIG. 13 that user data may include local data, data synchronized from a distributed device, and data of a pluggable device. The local data includes application data and public data, and the public data includes Camera, a picture, a video, an audio, a document, a download, and the like. Files such as the picture/video, the audio, and the document may be the public data shown in FIG. 13.

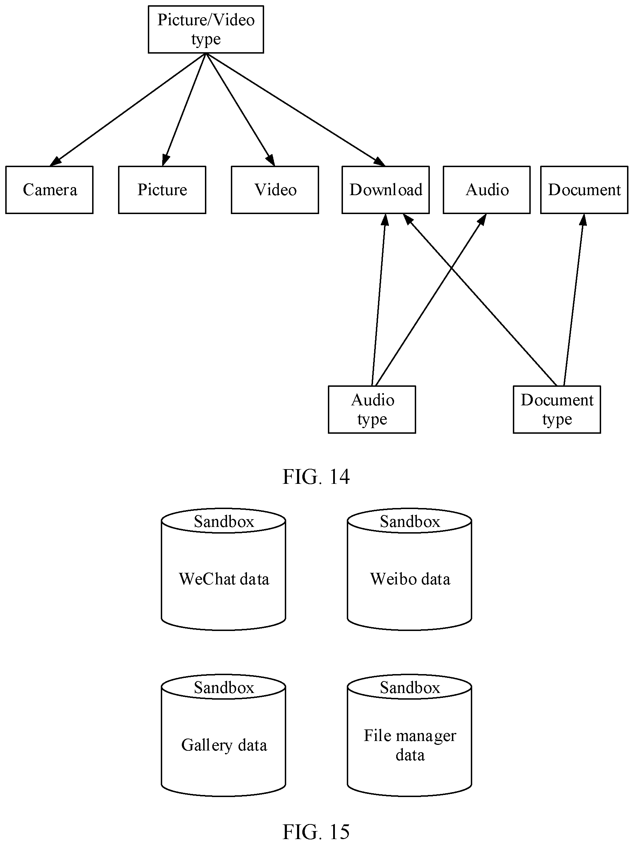

In the foregoing descriptions, the files are classified into the picture/video, the audio, and the document. FIG. 14 is a diagram of file classification according to an embodiment of this application.

Refer to FIG. 14. The files in the mobile phone may be classified into three types: a picture/video type, an audio type, and a document type. The three types may respectively correspond to three root directories. The three root directories are respectively a "directory 1: picture/video type", a "directory 2: audio type", and a "directory 3: document type". The "directory 1: picture/video type" may include a photo taken by a camera, a picture (for example, a picture in Gallery or Meitu), a video (for example, a video in Gallery or Meitu), a picture or a video downloaded from a network, and the like. The "directory 2: audio type" may include an audio (for example, a music or a recording), an audio downloaded from a network, and the like. The "directory 3: document type" may include a document (for example, a document in File manager), a document downloaded from a network, and the like.

Certainly, in some embodiments, a mixed storage directory may alternatively be set, for example, a "directory 4: audio type and document type", and a "directory 5: picture/video type and document type".

It should be noted that files of corresponding types may be stored in different directories. Cross-category storage is not allowed, and storage may be restricted by using a suffix. For example, a suffix of Camera may be "camera", a suffix of a picture may be "image", a suffix of a video may be "video", a suffix of an audio may be "audio", a suffix of a document may be "document", and a suffix of a downloaded file may be "download".

Picture/video files are stored in the directory 1, and files with the suffixes of "camera", "image", "video", and "download" may be stored in the directory 1. Audio files are stored in the directory 2, and files with the suffixes of "audio" and "download' may be stored in the directory 2. Document files are stored in the directory 3, and files with the suffixes of "document" and "download" may be stored in the directory 3. Audio files and document files are stored in the directory 4, and files with the suffixes of "audio", "download", and "document" may be stored in the directory 4. Picture/video files and document files are stored in the directory 5, and files with the suffixes of "camera", "image", "video", "download", and "document" may be stored in the directory 5.

It should be further noted that, in a process of accessing the root directory, the application cannot randomly create a new directory or a new file outside the set root directory.

For example, as described above, the set directories include three root directories, and the three root directories are respectively a "directory 1: picture/video type", a "directory 2: audio type", and a "directory 3: document type". In addition, if an application 1 has a permission to read the picture/video type, in a process of accessing the directory 1, the application 1 may create a new subdirectory below the directory 1, cannot create a new directory outside the directory 1, the directory 2, and the directory 3, and cannot create a new file outside the directory 1, the directory 2, and the directory 3.

If the application needs to store a new file in a file management module, the new file may be stored in a corresponding directory through an interface of a file access framework (file access framework, FAF). For example, if the application 1 needs to store a new picture in the file management module, the new picture may be stored in the "directory 1: picture/video type" through the interface of the FAF. If an application 3 needs to store a new document in the file management module, the new document may also be stored in the "directory 3: document type" through the interface of the FAF.

Certainly, in some possible implementations, files may alternatively be classified into four types: a picture type, a video type, an audio type, and a document type. This is not limited.

In this embodiment of this application, all files in an electronic device may be stored in the file management module. However, in the conventional technology, applications store respective files in independent space. FIG. 15 is an iOS (the iOS is an operating system developed by Apple for iPhone) sandbox restriction-based diagram.

Public data management for iOS-equipped devices is based on a strict application sandbox restriction. Each application stores data in independent space. Data is not shared among different applications. Gallery and File manager are used as an example. If a file in Gallery wants to be viewed in File manager, the file in Gallery needs to be copied to File manager. Similarly, if a file in File manager wants to be viewed in Gallery, the file in File manager needs to be copied to Gallery. This wastes storage resources.

According to a solution provided in this embodiment of this application, all files in the electronic device may be stored in the file management module. When an application having a permission to obtain a corresponding file subsequently needs to obtain the corresponding file in the electronic device, the application may obtain the corresponding file from the file management module. Compared with the solution in the conventional technology in which applications store respective files in independent space, the solution in this embodiment of this application can be used to reduce a waste of storage resources.

S1512: The application market reviews whether the permission applied for in the certificate is proper.

If the permission applied for in the certificate is proper, step S1514 is performed. If the permission applied for in the certificate is improper, step S1516 is performed.

In this embodiment of this application, that the application market reviews whether the permission applied for in the certificate carried by the application is proper may be understood as that the application market reviews whether the permission applied for in the certificate carried by the application is consistent with a permission that the application should have.

For example, it is assumed that a specific application should have a permission to access or operate a picture/video. If the application carries a certificate for applying for the permission to access or operate the picture/video and registers with the application market, and the application market finds, after reviewing, that the permission applied for by the application is proper, the application market authenticates the permission applied for by the application to access or operate the picture/video. If the application carries a certificate for applying for a permission to access or operate an audio and registers with the application market, and the application market finds, after reviewing, that the permission applied for by the application is improper, the application market does not authenticate the permission applied for by the application to access or operate the audio.

It should be noted that, in this embodiment of this application, a permission that a specific application should have may be written into a file package of the application when the developer develops the application, and the application market may obtain the permission that the application should have from the file package of the application, and review, based on the obtained permission that the application should have, whether the permission applied for by the application is proper.

S1514: The application market authenticates the permission applied for by the application.

S1516: The application market does not authenticate the permission applied for by the application.

S1518: The application accesses a file in the file management module by invoking an API of a picker.

It may be understood that, in this embodiment of this application, when the certificate carried by the application includes the applied permission, the application market may authenticate or may not authenticate the permission applied for by the application. When the certificate carried by the application does not include the applied permission, the application market does not review the application. If the application needs to access a file in the mobile phone, the application may directly access the file in the mobile phone by invoking the API of the system picker.

In this embodiment of this application, when the application market does not authenticate the permission applied for by the application, the application may access the file in the file management module by invoking the API of the system picker, so that the user can obtain the corresponding file. For example, in the GUIs shown in FIG. 10(a) to FIG. 10(i), the user accesses the file in the mobile phone through the application 4, and the application 4 may access the picture/video, the audio, the document, and the like in the mobile phone by invoking the API of the system picker, to present the file to the user. In FIG. 11(a) to FIG. 11(h), the user accesses the file in the mobile phone through the application 5, and the application 5 may access the picture/video, the audio, the document, and the like in the mobile phone by invoking the API of the system picker, to present the file to the user.

S1520: The user starts the application to access a file, and the application accesses the file in the file management module by invoking an interface of the file management module.

S1521: The application applies, through a pop-up window, for a permission to access a file.

It should be noted that, in this embodiment of this application, a developer may set a picture/video, an audio, and a document on a terminal device to an access control list (access control list, ACL) mode, so that the application on the terminal device has a permission to apply, through the pop-up window, to the user for accessing, editing, deleting a file, and creating a file.

It should be further noted that, when the application accesses the file in the file management module by invoking the interface of the file management module, the electronic device may display an interface in which the pop-up window is displayed to apply to the user for the permission to access the file, or may not display an interface in which the pop-up window is displayed to apply to the user for the permission to access the file. This is mainly related to whether the permission certificate corresponding to the application includes the permission applied for by the application. Specifically, if the permission certificate corresponding to the application includes the permission applied for by the application to access the file, the electronic device may display the interface in which the pop-up window is displayed to apply to the user for the file access permission. If the permission certificate corresponding to the application does not include the permission applied for by the application to access the file, the electronic device does not display the interface in which the pop-up window is displayed to apply to the user for the permission to access the file.

If the permission certificate corresponding to the application includes the permission applied for by the application to access the file, the electronic device may display the interface in which the pop-up window is displayed to apply to the user for the permission to access the file. For example, when the application 1 applies for accessing the picture/video in the mobile phone, the mobile phone may display an interface in which a pop-up window is displayed to apply to the user for a permission to access the picture/video, for example, the GUI shown in FIG. 6(d). The GUI displays the pop-up window: "'Application 1' wants to access your photo. Obtain the permission to access your photo, for accessing a photo, a video, or the like. Allow authorization".

For another example, when an application 2 applies for accessing the audio in the mobile phone, the mobile phone may display an interface in which a pop-up window is displayed to apply to the user for a permission to access the audio, for example, the GUI shown in FIG. 7(d). The GUI displays a pop-up window: "'Application 2' wants to access your audio. Obtain the permission to access your audio, for accessing a song, a recording, or the like. Allow authorization".

For another example, when the application 3 applies for accessing the document in the mobile phone, the mobile phone may display a pop-up window for applying to the user for a permission to access the document, for example, the GUI shown in FIG. 8(d). The GUI displays a pop-up window: "'Application 3' wants to access your document. Obtain the permission to access your document, for accessing a Word document, a PDF document, or the like. Allow authorization".

S1522: The user agrees with the permission applied for by the application.

S1524: The user disagrees with the permission applied for by the application.

It may be understood that the permission applied for by the application in steps S 1524 and S 1526 is the permission applied for by the application to access the file.

S1526: The application registers the applied permission with a permission verification module.

In this embodiment of this application, when the user agrees with the permission applied for by the application, the application may register the applied permission with the permission verification module, that is, register, with the permission verification module, the applied permission to access the file.

For example, in the GUI shown in FIG. 6(d), the "application 1" applies for the permission to access the photo in the mobile phone. After the user taps the "Allow" icon, the application 1 may register, with the permission verification module, the applied permission to access the photo.

For another example, in the GUI shown in FIG. 7(d), the "application 2" applies for the permission to access the audio in the mobile phone. After the user taps the "Allow" icon, the application 2 may register, with the permission verification module, the applied permission to access the audio in the mobile phone.

For another example, in the GUI shown in FIG. 8(d), the "application 3" applies for the permission to access the document in the mobile phone. After the user taps the "Allow" icon, the application 3 may register, with the permission verification module, the applied permission to access the document in the mobile phone.

S1528: The permission verification module verifies whether the application obtains the corresponding permission.

If the application obtains the corresponding permission, step S1530 is performed. If the application does not obtain the corresponding permission, step S1532 is performed.

S1530: Return the file accessed by the user.

S1532: Skip returning the file accessed by the user.

In step S1521, the application applies for the permission to access the file. The user may agree with the permission applied for by the application, or may disagree with the permission applied for by the application. When the user agrees with the permission applied for by the application, the application may register the applied permission with the permission verification module. Although the application registers the applied permission with the permission verification module, the permission verification module does not know user behavior, and the permission verification module does not know whether the permission registered by the application is true or false. Therefore, the permission verification module may further perform verification to verify whether the application obtains the permission to access the corresponding file, and return or not return the file based on a verification result.

For example, when the application accesses the picture/video in the mobile phone by invoking a picture/video interface of the file management module, the permission verification module may verify whether the application obtains the permission to access the picture/video, and return or not return the picture/video based on a verification result. As shown in FIG. 6(c), after the mobile phone detects the operation that the user taps the "Album" icon 803, if the permission verification module verifies that the application 1 has obtained the permission to access the picture/video in the mobile phone, the GUI shown in FIG. 6(e) may be displayed. If the permission verification module verifies that the application 1 does not obtain the permission to access the picture/video in the mobile phone, the main interface of the application 1 may be displayed.

When the application accesses the audio in the mobile phone by invoking an audio interface of the file management module, the permission verification module may verify whether the application obtains the permission to access the audio, and return or not return the audio based on a verification result. As shown in FIG. 7(c), after the mobile phone detects the operation that the user taps the "Audio" icon 1003, if the permission verification module verifies that the application 2 has obtained the permission to access the audio in the mobile phone, the GUI shown in FIG. 7(e) may be displayed. If the permission verification module verifies that the application 2 does not obtain the permission to access the audio in the mobile phone, the main interface of the application 2 may be displayed.

When the application accesses the document in the mobile phone by invoking a document interface of the file management module, the permission verification module may verify whether the application obtains the permission to access the document, and return or not return the document based on a verification result. As shown in FIG. 8(c), after the mobile phone detects the operation that the user taps the "Document" icon 1103, if the permission verification module verifies that the application 3 has obtained the permission to access the document in the mobile phone, the GUI shown in FIG. 8(e) may be displayed. If the permission verification module verifies that the application 3 does not obtain the permission to access the document in the mobile phone, the main interface of the application 3 may be displayed.

S1534: The user performs a further operation on the file.

The further operation in this embodiment of this application may include editing or deleting a file, creating a file, and the like.

S1536: The application applies, through a pop-up window, for a permission to edit, delete, and create a file.

It should be noted that, in this embodiment of this application, when the user needs to perform the further operation on the accessed file, the electronic device may display an interface in which the pop-up window is displayed to apply to the user for the permission to edit, delete, or create the file, or may not display an interface in which the pop-up window is displayed to apply to the user for the permission to edit, delete, or create the file. This is mainly related to whether the permission certificate corresponding to the application includes the permission applied for by the application. Specifically, if the permission certificate corresponding to the application includes the permission that is applied for by the application to edit, delete, and create the file, the electronic device may display the interface in which the pop-up window is displayed to apply to the user for the permission to edit, delete, and create the file. If the permission certificate corresponding to the application does not include the permission that is applied for by the application to edit, delete, and create the file, the electronic device does not display the interface in which the pop-up window is displayed to apply to the user for the permission to edit, delete, and create the file.

If the permission certificate corresponding to the application includes the permission that is applied for by the application to edit, delete, and create the file, the application may apply, through the pop-up window, to the user for the permission to edit, delete, and create the file. For example, when the application 1 applies for editing or deleting a picture/video in the mobile phone and creating a picture/video, the mobile phone may display an interface in which a pop-up window is displayed to apply to the user for a permission to edit, delete, and create a picture/video, for example, the GUI shown in FIG. 6(k). The GUI displays the pop-up window: "'Application 1' wants to edit or delete your photo, and create a photo. Obtain the permission to edit, delete, and create the photo, for editing, deleting, and creating a picture, a video, or the like. Allow authorization".

For another example, when the application 2 applies for editing or deleting an audio in the mobile phone and creating an audio, the mobile phone may display an interface in which a pop-up window is displayed to apply to the user for a permission to edit, delete, or create an audio, for example, the GUI shown in FIG. 7(g). The GUI displays the pop-up window: "'Application 2' wants to edit and delete your audio, and create an audio. Obtain the permission to edit, delete, and create an audio, for editing, deleting, and creating a song, a recording, or the like. Allow authorization".

For another example, when the application 3 applies for editing or deleting a document in the mobile phone and creating a document, the mobile phone may display an interface in which a pop-up window is displayed to apply to the user for a permission to edit, delete, or create a document, for example, the GUI shown in FIG. 8(g). The GUI displays the pop-up window: "'Application 3' wants to edit and delete your document and create a document. Obtain the permission to edit, delete, and create a document, for editing, deleting, and creating a Word document, a PDF document, or the like. Allow authorization".

S1538: The user agrees with the permission applied for by the application.

S1540: The user disagrees with the permission applied for by the application.

It may be understood that the permission applied for by the application in S1538 and S1540 is the permission applied for by the application to edit, delete, and create the file.

S1542: The application registers the applied permission with the permission verification module.

For example, in the GUI shown in FIG. 6(k), the "application 1" applies for the permission to edit, delete, and create the photo. After the user taps the "Allow" icon, the application 1 may register, with the permission verification module, the applied permission to edit, delete, and create the photo.

For another example, in the GUI shown in FIG. 7(g), the "application 2" applies for the permission to edit, delete, and create the audio. After the user taps the "Allow" icon, the application 2 may register, with the permission verification module, the applied permission to edit, delete, and create the audio.

For another example, in the GUI shown in FIG. 8(g), the "application 3" applies for the permission to edit, delete, and create the document. After the user taps the "Allow" icon, the application 1 may register, with the permission verification module, the applied permission to edit, delete, and create the document.

S1544: The permission verification module verifies whether the application obtains the corresponding permission.

If the application obtains the corresponding permission, step S1546 is performed. If the application does not obtain the corresponding permission, step S1548 is performed.

S1546: The user has the permission to edit, delete, and create the file.

S1548: The user does not have the permission to edit, delete, or create the file.

Similarly, in step S1536, the application applies for the permission to edit, delete, and create the file, and the user may agree with the permission applied for by the application, or may disagree with the permission applied for by the application. When the user agrees with the permission applied for by the application, the application may register the applied permission with the permission verification module. Although the application registers the applied permission with the permission verification module, the permission verification module does not know user behavior, and the permission verification module does not know whether the permission registered by the application is true or false. Therefore, the permission verification module may further perform verification to verify whether the application obtains the permission to edit, delete, and create the corresponding file. The user can perform an operation or cannot perform an operation based on a verification result.

After the user obtains the permission to edit, delete, and create the file, the user may modify metadata information of the file in the file management module. In this way, other applications can learn of the modifying of the metadata information of the file from the file management module. This can resolve a problem that other applications cannot learn of the modifying in time after a specific application modifies the metadata information in some current operating systems.

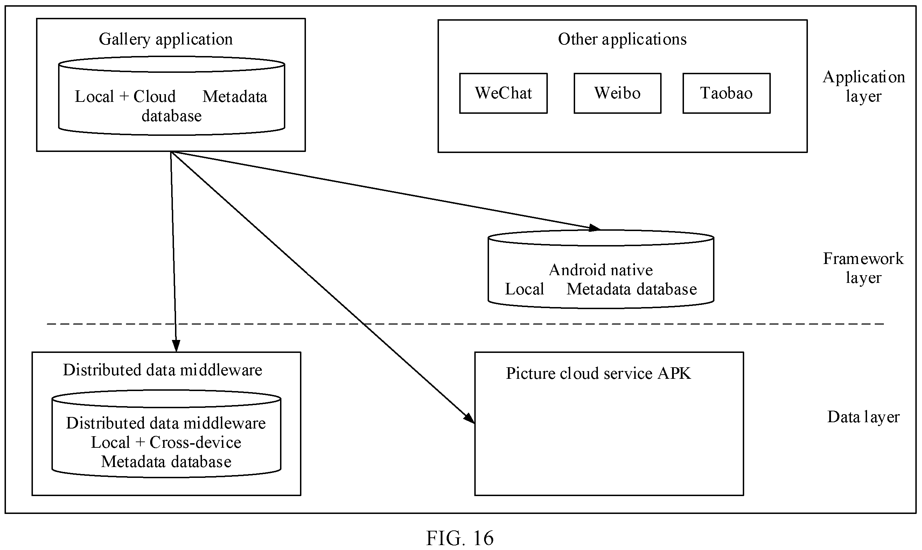

FIG. 16 is a diagram of metadata distribution of an Android operating system.

For public data of the Android operating system, a media library manages metadata information of the public data in a unified manner. After obtaining the metadata information of the media library, each application generates corresponding metadata and manages the metadata, and metadata is not synchronized between applications (for example, metadata is not synchronized between Recycle bin, Favorites folder, Album, and File manager). Different applications can access files such as a picture and a document on a device. However, some metadata information (for example, whether the file is a favorite file, whether the file is a hidden file, and whether the file is presented in Recycle bin) of the file are independently generated and maintained by each application, and the metadata information is not shared among the applications. For example, if a photo is added to favorites in Gallery, information that is added to favorites cannot be viewed in File manager. If an important file is added to favorites in File manager, the important file that is added to favorites cannot be viewed in Gallery.

According to a solution provided in this embodiment of this application, an application that applies for a corresponding permission may modify the metadata information of the file in the file management module. For example, if a user finds that the user likes a photo in the mobile phone after accessing the photo A through an application 1, the user may mark the photo A as favorites in the file management module. When another application (the application also has the permission to access a picture/video in the mobile phone) accesses the photo A in the file management module, the another application can know that the photo A has been marked as favorites. Alternatively, after the application 1 marks the photo A as favorites in the file management module, the application 1 may notify other applications that also have the permission to access the picture/video in the mobile phone of information about adding the photo A to favorites. In this way, the other applications may also know that the photo A has been marked as favorites.

For another example, after accessing a photo B in the mobile phone through the application 1, the user finds that the user does not like the photo, and may delete the photo A from the file management module to Recycle bin. When another application (the application has the permission to access the picture/video in the mobile phone) accesses the photo A in the file management module, the another application can know that the photo A has been deleted to Recycle bin. Alternatively, after the application 1 deletes the photo A to Recycle bin in the file management module, the application 1 may notify other applications that also have the permission to access the picture/video in the mobile phone of information about deleting the photo A to Recycle bin. In this way, the other applications may also know that the photo A has been deleted to Recycle bin.

According to the solution provided in this application, the file management module stores the public data and manages the public data in the unified manner, and each application may obtain corresponding data from the file management module, to reduce a waste of storage resources. A permission of a terminal device is set to an application market management and control manner in permission configuration, and whether the application has a permission to directly access and operate a public file is determined based on an application category. When it is determined that the application has the permission to directly access and operate the public file, a corresponding permission is granted to the application based on a type of a file that the application applies for accessing or operating. Compared with a solution in the conventional technology in which an application developer independently determines specific permissions that are requested to be granted by the user and the application obtains the corresponding permission once the user grants the permission, the solution in this application can be used to provide the released review mechanism of the application market, so that the application can be prevented from applying, through a pop-up window to the user at a source, for granting some improper permissions. Further, in the conventional technology, file disorder caused by randomly adding, deleting, modifying, and querying a public file in the electronic device after the application obtains some improper permissions can be avoided. In addition, when a specific application modifies information about the metadata of the file in the file management module, other applications may also learn of the modified information about the metadata. This can resolve a problem that other applications cannot learn of the modifying in time after the specific application modifies the metadata information in some current operating systems.

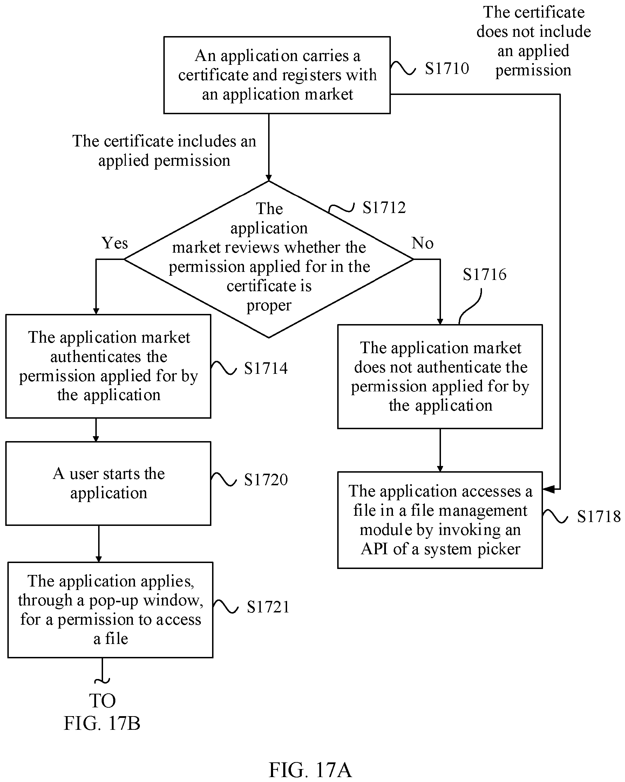

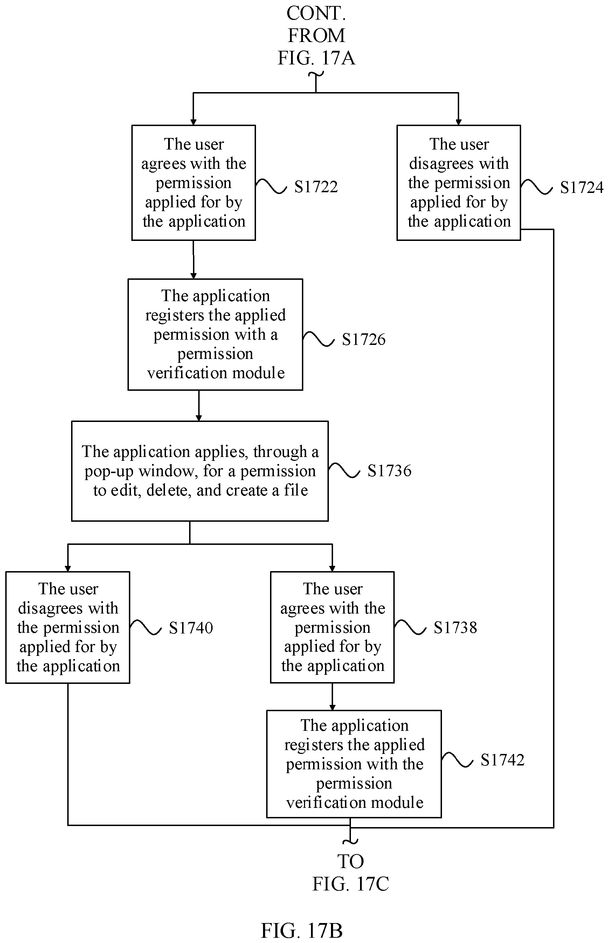

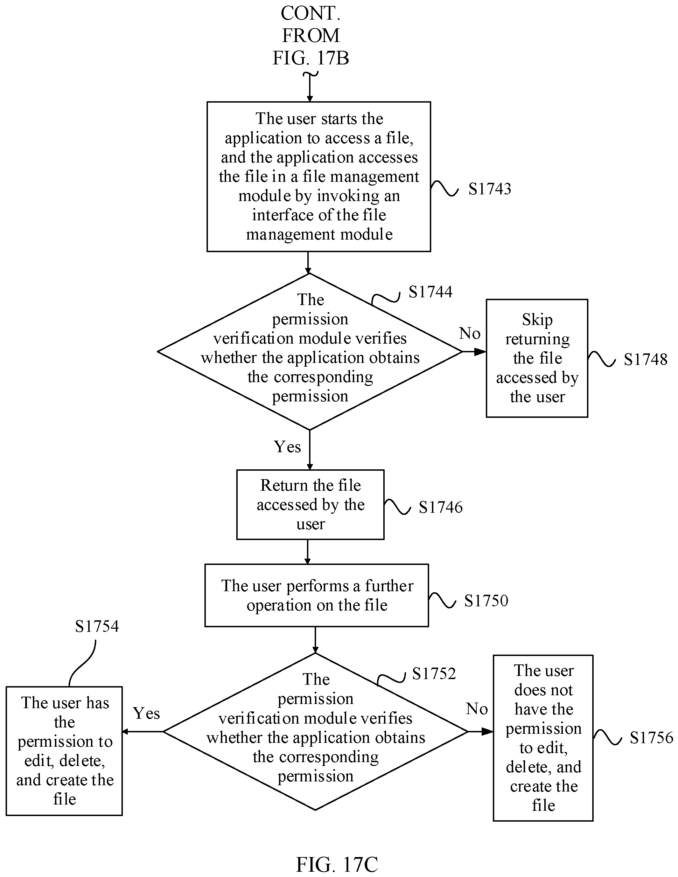

FIG. 17A to FIG. 17C are a diagram of another file management method and application management method according to an embodiment of this application. The method may include steps S1710 to S1756.

S1710: An application carries a certificate and registers with an application market.

If the certificate includes an applied permission, step S1712 is performed. If the certificate does not include the applied permission, step S1718 is performed.

S1712: The application market reviews whether the permission applied for in the certificate is proper.

If the permission applied for in the certificate is proper, step S1714 is performed. If the permission applied for in the certificate is improper, step S1716 is performed.

S1714: The application market authenticates the permission applied for by the application.

S1716: The application market does not authenticate the permission applied for by the application.

S1718: The application accesses a file in a file management module by invoking an API interface of a system picker.

S1720: A user starts the application.

S1721: The application applies, through a pop-up window, for a permission to access a file.

S1722: The user agrees with the permission applied for by the application.

S1724: The user disagrees with the permission applied for by the application.

The permission applied for in steps S1722 and S1724 is a file access permission that the application applies for through the pop-up window.

S1726: The application registers the applied permission with a permission verification module.

S1736: The application applies, through a pop-up window, for a permission to edit, delete, and create a file.

S1738: The user agrees with the permission applied for by the application.

S1740: The user disagrees with the permission applied for by the application.

The permission applied for in steps S1736 and S1738 is a file editing, deletion, and creation permission that the application applies for through the pop-up window.

S1742: The application registers the applied permission with the permission verification module.

S1743: The user starts the application to access a file, and the application accesses the file in the file management module by invoking an interface of the file management module.

S 1744: The permission verification module verifies whether the application obtains the corresponding permission.

If the application obtains the corresponding permission, step S1746 is performed. If the application does not obtain the corresponding permission, step S1748 is performed.

The corresponding permission in step S1744 is a file access permission.

S 1746: Return the file accessed by the user.

S 1748: Skip returning the file accessed by the user.

S 1750: The user performs a further operation on the file.

S 1752: The permission verification module verifies whether the application obtains the corresponding access permission.

If the application obtains the corresponding access permission, step S1754 is performed. If the application does not obtain the corresponding access permission, step S1756 is performed.

S 1754: The user has the permission to edit, delete, and create the file. S 1756: The user does not have the permission to edit, delete, or create the file.

The corresponding permission in step S1752 is the permission to edit, delete, and create the file.

Content shown in FIG. 17A to FIG. 17C is basically the same as content shown in FIG. 12A to FIG. 12C. A difference lies in an execution sequence, and a main difference lies in an action of triggering the application to apply for a permission through a pop-up window.

In FIG. 12A to FIG. 12C, an action of triggering the application to apply, through the pop-up window, for the permission to access the file exists after the user starts the application, and when the file in the mobile phone is viewed through the application, the application accesses the file by invoking the interface in the file management module. However, in FIG. 17A to FIG. 17C, an action of triggering the application to apply, through the pop-up window, for the permission to access the file exists when the user starts the application.

In FIG. 12A to FIG. 12C, the action of triggering the application to apply, through the pop-up window, for editing, deleting, and creating the file exists when the user performs the further operation on the accessed file. In FIG. 17A to FIG. 17C, the action of triggering the application to apply, through the pop-up window, for editing, deleting, and creating the file exists when the user agrees with the permission that the application applies for accessing the file.

For other content, refer to related descriptions in FIG. 12A to FIG. 12C. Details are not described herein again.

In addition, it should be noted that, in this embodiment of this application, the action of triggering the application to apply for the permission through the pop-up window may be determined by the developer when the developer develops the application. FIG. 12A to FIG. 17C respectively show two possible manners. In some possible implementations, the action of triggering the application to apply for the permission through the pop-up window may exist after any of the foregoing steps. This is not limited.

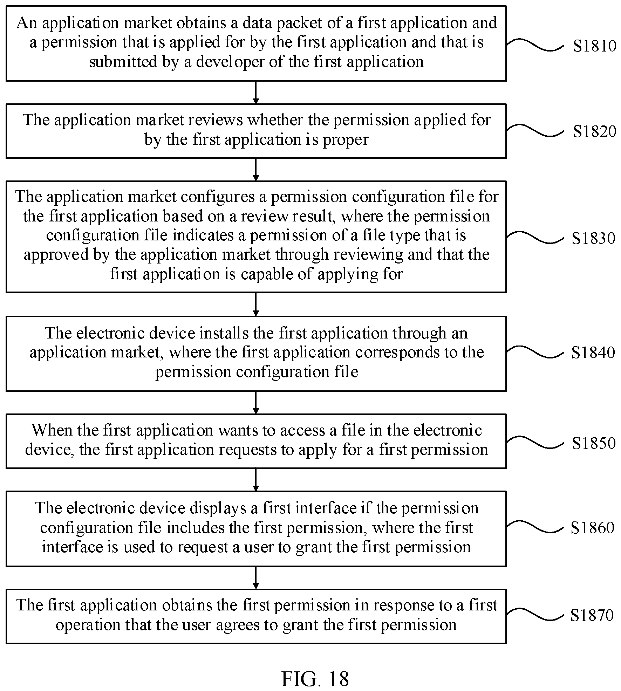

FIG. 18 is a diagram of still another file management method and application management method according to an embodiment of this application. The method may include steps S1810 to S1870.

S1810: An application market obtains a data packet of a first application and a permission that is applied for by the first application and that is submitted by a developer of the first application.

S1820: The application market reviews whether the permission applied for by the first application is proper.

S1830: The application market configures a permission configuration file for the first application based on a review result, where the permission configuration file indicates a permission, for a file type, that is approved by the application market through reviewing and that the first application is capable of applying for.

S1840: The electronic device installs the first application through an application market, where the first application corresponds to the permission configuration file.

S1850: When the first application wants to access a file in the electronic device, the first application requests to apply for a first permission.

S1860: The electronic device displays a first interface if the permission configuration file includes the first permission, where the first interface is used to request a user to grant the first permission.

S1870: The first application obtains the first permission in response to a first operation that the user agrees to grant the first permission.

The electronic device in this embodiment of this application may be the foregoing mobile phone, and the first application may be any one of the foregoing application 1, application 2, and application 3. If the first application is the application 1, the first interface may be the GUI shown in FIG. 6(d). If the first application is the application 2, the first interface may be the GUI shown in FIG. 7(d). If the first application is the application 3, the first interface may be the GUI shown in FIG. 8(d).

According to a solution provided in this embodiment of this application, for the newly released first application, a released review mechanism of the application market that is provided in this application may filter out some improper applied permissions for the user. When the electronic device installs, through the application market, the first application reviewed by the application market, and when the first application wants to access the file in the electronic device, the first application may request to apply for the first permission. Only when the permission configuration file includes the first permission, the electronic device may display the first interface in which the first permission is requested to be granted by the user, and the first application can obtain the first permission when the user agrees to grant the first permission. In other words, the first application can obtain the first permission only when the application market approves the first application through reviewing and the user agrees to grant the applied first permission, and then the user can perform a corresponding permission operation on the file in the electronic device. Compared with a solution in the conventional technology in which an application developer independently determines specific permissions that are requested to be granted by the user and an application obtains the corresponding permissions once the user grants the permissions, the solution in this application can be used to provide a mechanism for the application market to review whether a permission that a to-be-released application wants to apply for is proper, so that the first application can be prevented from applying, through a pop-up window to the user at a source, for granting some improper permissions. Further, in the conventional technology, file disorder caused by randomly adding, deleting, modifying, and querying a public file in the electronic device after the application obtains some improper permissions can be avoided.

Optionally, in some embodiments, the method further includes: The electronic device skips displaying the first interface if the permission configuration file does not include the first permission.

In this embodiment of this application, the electronic device does not display the first interface if the permission configuration file does not include the first permission applied for by the first application.

As shown in FIG. 6(c), after the mobile phone detects an operation that the user taps the "Audio" icon 803, the interface does not display a new interface. After the mobile phone detects an operation that the user taps the "Album" icon 803, a GUI shown in FIG. 6(d) may be displayed. Because when developing the application 1, the developer wants the application 1 to have a permission to apply for a picture/video and an audio. Therefore, the "Album" icon and the "Audio" icon are displayed in FIG. 6(c). However, the application market reviews that the application 1 has only the permission to apply for the picture/video, but does not have the permission to apply for the audio. Therefore, the application market may configure, for the application 1, a configuration file that can apply for the permission to apply for the picture/video. Therefore, when the user taps the "Audio" icon, the interface of the mobile phone does not display a new interface. When the user taps the "Album" icon, the interface of the mobile phone may display a new interface. The new interface is the first interface in this embodiment of this application.

According to a solution provided in this embodiment of this application, the application market configures the permission configuration file for the first application based on a review result. When the permission configuration file includes the first permission requested by the first application, the electronic device may not display the first interface in which the first permission is requested to be granted by the user, the first application does not have the first permission, and further, the user cannot perform a corresponding permission operation on the file in the electronic device. Compared with a solution in the conventional technology in which an application developer independently determines specific permissions that are requested to be granted by the user and the application obtains the corresponding permissions once the user grants the permissions, the solution in this application can be used to provide a mechanism for the application market to review whether a permission that a to-be-released application wants to apply for is proper, so that the first application can be prevented from applying, through a pop-up window to the user at a source, for granting some improper permissions. Further, in the conventional technology, file disorder caused by randomly adding, deleting, modifying, and querying a public file in the electronic device after the application obtains some improper permissions can be avoided.

Optionally, in some embodiments, the method further includes: The electronic device installs a second application through the application market; and when the second application wants to access the file in the electronic device, the second application accesses the file in the electronic device through a file picker provided by an operating system of the electronic device.

The second application in this embodiment of this application may be a non-management application. When accessing the file in the electronic device, the non-management application may access the file in the electronic device through a file picker provided by an operating system of the electronic device. For a specific process, refer to the GUIs shown in FIG. 10(a) to FIG. 10(i) or FIG. 11(a) to FIG. 11(h) and related content of step S1518 in FIG. 12A. Details are not described herein again.

According to a solution provided in this embodiment of this application, the electronic device installs the second application through the application market. When the second application wants to access the file in the electronic device, the second application may access the file in the electronic device through the file picker provided by the operating system of the electronic device, that is, the second application may access, through an interface provided by the file picker, a target file that the user wants to access. In this manner, it can be ensured that the second application can access the file in the electronic device, and the second application can be restricted from randomly accessing or operating the file in the electronic device, so that in the conventional technology, file disorder caused by randomly adding, deleting, modifying, and querying a public file in the electronic device by the second application can be avoided.

Optionally, in some embodiments, that the second application accesses the file in the electronic device through a file picker specifically includes:
The electronic device displays a second interface, where the second interface includes one or more candidate files provided by the file picker;
the electronic device receives a second operation that the user determines one or more target files from the one or more candidate files; and
the second application obtains, in response to the second operation, a permission to access the one or more target files.

The second interface in this embodiment of this application may be the GUI shown in FIG. 10(d) or the GUI shown in FIG. 11(d). FIG. 10(a) to FIG. 10(i) are used as an example. Refer to the GUI shown in FIG. 10(d). The interface displays all photos in the mobile phone. The user may select photos from all the photos for viewing. If the user selects a picture A2 and a picture B3, a number appears in o at a lower right corner of the picture A2 and a lower right corner of the picture B3, where the number indicates a sequence of selecting the photos. After the mobile phone detects an operation that the user taps a "Next step" icon 1306, a GUI shown in FIG. 10(e) may be displayed.

In this embodiment of this application, after the second application obtains the permission to access the one or more target files, the second application may access the file in the electronic device through the file picker.

According to a solution provided in this embodiment of this application, the electronic device installs the second application through the application market. When the second application wants to access the file in the electronic device, the electronic device displays the second interface including the one or more candidate files provided by the file picker, and the user may allow the second application to access the target file selected by the user in the candidate file. In other words, the second application may access, through the interface provided by the file picker, the target file selected by the user in the candidate file, but cannot access any candidate file. In this manner, it can be ensured that the second application can access the file selected by the user from the electronic device for access, and the second application can be restricted from randomly accessing or operating the file in the electronic device, so that in the conventional technology, file disorder caused by randomly adding, deleting, modifying, and querying a public file in the electronic device by the second application can be avoided.

Optionally, in some embodiments, the first application is a management application, and the management application is an application that relies on accessing a large quantity of one or more types of files in the electronic device to implement a main function of the management application.

The second application is a non-management application, and the non-management application is an application that does not rely on accessing a large quantity of one or more types of files in the electronic device to implement a main function of the non-management application.

The management application in this embodiment of this application is an application that relies on accessing a large quantity of one or more types of files in the electronic device to implement a main function of the management application. For example, the file manager application is an application that relies on accessing a large quantity of documents, pictures, videos, and audio files in the electronic device to implement a file management function of the file manager application. Therefore, the file manager application is a management application. An album application is an application that relies on accessing a large quantity of pictures and video files in the electronic device to implement a picture/video management function of the album application. Therefore, the album application is also a management application.

The non-management application in this embodiment of this application is an application that does not rely on accessing a large quantity of one or more types of files in the electronic device to implement a main function of the non-management application. For example, a WeChat application, as a social application whose main function is instant messaging, does not rely on accessing files of one or more types of a full picture and video type, an audio type, and a document type in the electronic device to implement a main function of the electronic device. Therefore, the WeChat application is a non-management application.

Optionally, in some embodiments, the file in the electronic device is stored in the file management module, and the method further includes:

The first application accesses a target file through a first interface of the file management module, where a file type of the target file is the same as a file type that the first permission is applied for.

According to a solution provided in this embodiment of this application, the file in the electronic device is stored in the file management module, the first application may access the target file through the first interface of the file management module, and the file type of the target file is the same as the file type that the first permission is applied for. Because the file in the electronic device is stored in the file management module, when the first application wants to access the file on the electronic device, the first application may access the file through the first interface of the file management module. Compared with a solution in the conventional technology in which applications store respective files, the solution in this application can be used to reduce a waste of storage resources.

Optionally, in some embodiments, that the permission configuration file indicates a permission, for a file type, that is approved by the application market through reviewing and that the first application is capable of applying for includes any one of the following:
a permission to access or operate a picture/video file, a permission to access or operate an audio file, and a permission to access or operate a document file.

According to a solution provided in this embodiment of this application, the permission, for the file type, that the first application is capable of applying for and that is included in the permission configuration file configured by the application market for the first application may include any one of the permission to access or operate the picture/video file, the permission to access or operate the audio file, and the permission to access or operate the document file. In a running process of the first application, the first application may apply, according to a requirement, for a permission that is required by the first application to perform a specific type of operation on a specific type of file and that is required by the first application to perform a current function, and the user grants the permission to the application as required. Compared with a solution in the conventional technology in which the application applies for a permission to perform any type of operation (read, write, edit, or the like) on any type of file (a document, a picture, an audio, a video, or the like) in storage space, the solution in this application can be used to avoid file disorder caused by the any type of operation performed by the application on the any type of file.

Optionally, in some embodiments, the permission to access or operate the picture/video file includes: a permission to read, edit, delete, or create the picture/video file.

The permission to access or operate the audio file includes a permission to read, edit, delete, or create the audio file.

The permission to access or operate the document file includes a permission to read, edit, delete, or create the document file.

Optionally, in some embodiments, the file in the electronic device is stored in a corresponding preset directory based on the file type.

The preset directory in this embodiment of this application may be the foregoing root directory, for example, "directory 1: picture/video type", "directory 2: audio type", or "directory 3: document type".

According to a solution provided in this embodiment of this application, the file in the electronic device is stored in the corresponding preset directory based on the file type. When an application needs to obtain a type of file, the application can quickly find the corresponding file.

Optionally, in some embodiments, the first application does not have a permission to create a new directory or a new file outside a preset directory that already exists in the electronic device.

According to a solution provided in this embodiment of this application, the first application does not have the permission to create the new directory or the new file outside the preset directory that already exists in the electronic device. In other words, the first application cannot create the new directory or the new file outside the preset directory that already exists in the electronic device, so that order of files in the electronic device can be ensured.

Optionally, in some embodiments, the file in the electronic device is stored in the file management module, and the method further includes:

The electronic device modifies, through the first application, metadata information of the target file stored in the file management module, where the file type of the target file is the same as the file type that the first permission is applied for; and
when the electronic device accesses the target file through the second application, the second application obtains metadata information that is of the target file and that is modified by the electronic device through the first application, where the second application is different from the first application.

According to a solution provided in this embodiment of this application, the first application may modify the metadata information of the target file stored in the file management module. When the electronic device accesses the target file through the second application, the second application may obtain the metadata information that is of the target file and that is modified by the electronic device through the first application. In this manner, when the first application modifies the metadata information of the target file in the file management module, the second application may also learn from the file management module, so as to implement sharing of the metadata information of the file between the applications. A problem that another application cannot learn in time after a specific application modifies metadata information of a file in some current operating systems can be resolved.

Optionally, in some embodiments, that the application market reviews whether the permission applied for by the first application is proper includes:

The application market reviews, based on an application type of the first application, whether the permission applied for by the first application is proper.

The application type in this embodiment of this application may include a management application and a non-management application. For specific definitions of the management application and the non-management application, refer to the content described above.

According to a solution provided in this embodiment of this application, the application market reviews, based on the application type of the first application, whether the permission applied for by the first application is proper. If the first application is the management application, the application market may further review whether the permission applied for by the first application is proper, and configure the permission configuration file for the first application. In this way, the first application can access or operate a file with a corresponding permission based on the permission configuration file. If the first application is the non-management application, the application market may not review reasonableness of the permission applied for by the first application, and may directly reject the permission applied for by the first application. In this way, the first application may access or operate the file selected by the user. Permissions of an application may be distinguished in such a review mechanism. Compared with a solution in the conventional technology in which an application developer independently determines specific permissions that are requested to be granted by the user and the application obtains the corresponding permissions once the user grants the permissions, the solution in this application can be used to provide the released review mechanism of the application market to avoid public file disorder caused by randomly adding, deleting, modifying, and querying a file in the electronic device when the application obtains some improper permissions in the conventional technology.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In the embodiments, function modules of the electronic device may be obtained through division based on the foregoing method examples. For example, the function modules may be obtained through division based on the functions, or two or more functions may be integrated into one processing module. The integrated module may be implemented in a form of hardware. It should be noted that module division in this embodiment is an example and is merely logical function division. In actual implementation, there may be another division manner.

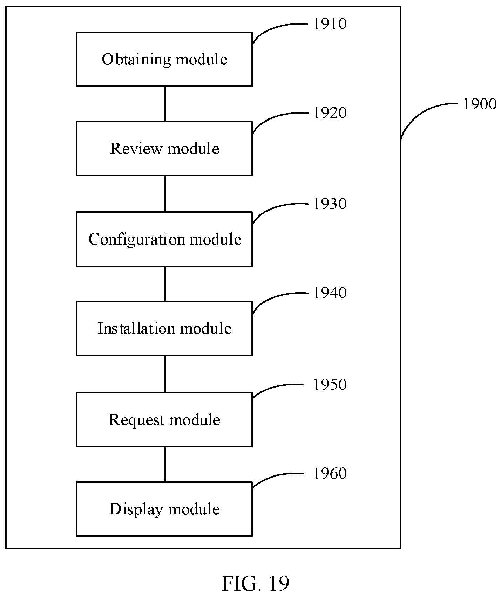

When each function module is obtained through division based on each corresponding function, FIG. 19 is a possible composition diagram of the electronic device in the foregoing embodiment. As shown in FIG. 19, the electronic device 1900 may include: an obtaining module 1910, a review module 1920, a configuration module 1930, an installation module 1940, a request module 1950, and a display module 1960.

The obtaining module 1910 may be configured to support the electronic device 1900 in performing step S1810, S1870, or the like, and/or used in another process of the technology described in this specification.

The review module 1920 may be configured to support the electronic device 1900 in performing step S1820 and the like, and/or used in another process of the technology described in this specification.

The configuration module 1930 may be configured to support the electronic device 1900 in performing step S1830 and the like, and/or used in another process of the technology described in this specification.

The installation module 1940 may be configured to support the electronic device 1900 in performing step S1840 and the like, and/or used in another process of the technology described in this specification.

The request module 1950 may be configured to support the electronic device 1900 in performing step S1850 and the like, and/or used in another process of the technology described in this specification.

The display module 1960 may be configured to support the electronic device 1900 in performing step S1860 and the like, and/or used in another process of the technology described in this specification.

It should be noted that all related content of the steps in the foregoing method embodiments may be cited in function description of corresponding functional modules. Details are not described herein again.

The electronic device provided in this embodiment is configured to perform the foregoing method in this application, and therefore can achieve a same effect as the foregoing implementation method.

When an integrated unit is used, the electronic device may include a processing module, a storage module, and a communication module. The processing module may be configured to control and manage an action of the electronic device, for example, may be configured to support the electronic device in performing the steps performed by the foregoing units. The storage module may be configured to support the electronic device in storing program code, data, and the like. The communication module may be configured to support communication between the electronic device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

In an embodiment, when the processing module is a processor and the storage module is a memory, the electronic device in this embodiment may be a device in the structure shown in FIG. 1.

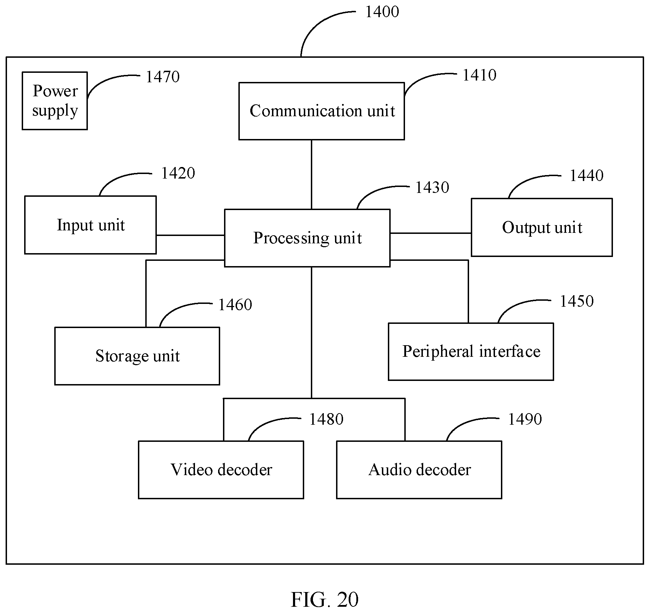

FIG. 20 is another possible composition diagram of an electronic device 1400 in the foregoing embodiments. As shown in FIG. 20, the electronic device 1400 may include a communication unit 1410, an input unit 1420, a processing unit 1430, an output unit (or may also be referred to as a display unit) 1440, a peripheral interface 1450, a storage unit 1460, a power supply 1470, a video decoder 1480, and an audio decoder 1490.

The communication unit 1410 is configured to establish a communication channel, so that the electronic device 1400 is connected to a remote server through the communication channel and downloads media data from the remote server. The communication unit 1410 may include a communication module such as a WLAN module, a Bluetooth module, an NFC module, or a baseband module, and a radio frequency (Radio Frequency, RF for short) circuit corresponding to the communication module, and is configured to perform wireless local area network communication, Bluetooth communication, NFC communication, infrared communication, and/or cellular communication system communication, for example, wideband code division multiple access (wideband code division multiple access, W-CDMA) and/or high speed downlink packet access (high speed downlink packet access, HSDPA). The communication module 1410 is configured to control communication between components in the electronic device, and may support direct memory access.

The input unit 1420 may be configured to implement interaction between a user and the electronic device and/or input information into the electronic device. In a specific implementation of this application, the input unit may be a touch panel, may be another human-machine interaction interface, for example, a physical input key or a microphone, or may be another external information capture apparatus, for example, a camera.

The processing unit 1430 is a control center of the electronic device, and may be connected to all parts of the entire electronic device through various interfaces and lines. By running or executing a software program and/or a module stored in the storage unit and invoking data stored in the storage unit, the processing unit 1430 performs various functions of the electronic device and/or processes data. Steps S1810, S1820, S1830, S1840, S1850, S1870, and the like may be implemented by using the processing unit 1430.

The output unit 1440 includes but is not limited to an image output unit and a voice output unit. The image output unit is configured to output a text, a picture, and/or a video. In a specific implementation of this application, the touch panel used by the input unit 1420 may also be used as a display panel of the output unit 1440. For example, after detecting a gesture operation of touching or approaching the touch panel, the touch panel transmits the gesture operation to the processing unit to determine a type of a touch event, and then the processing unit provides a corresponding visual output on the display panel based on the type of the touch event. In FIG. 20, the input unit 1420 and the output unit 1440 serve as two separate components to implement input and output functions of the electronic device. However, in some embodiments, the touch panel and the display panel may be integrated to implement the input and output functions of the electronic device. For example, the image output unit may display various graphical user interfaces as virtual control components, including but not limited to a window, a scrollbar, an icon, and a clipboard, so that a user can perform an operation through touching. Step S1860 may be implemented by using the output unit 1440.

The storage unit 1460 may be configured to store a software program and a module. The processing unit runs the software program and the module that are stored in the storage unit to perform various function applications of the electronic device and implement data processing.

This embodiment further provides a computer storage medium. The computer storage medium stores computer instructions. When the computer instructions are run on an electronic device, the electronic device is enabled to perform the foregoing related method steps to implement the method in the foregoing embodiment.

This embodiment further provides a computer program product. When the computer program product runs on a computer, the computer is enabled to perform the related steps, to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the methods in the foregoing method embodiments.

The electronic device, the computer storage medium, the computer program product, or the chip provided in the embodiments may be configured to perform the corresponding methods provided above. Therefore, for beneficial effects that can be achieved, refer to the beneficial effects of the corresponding methods provided above. Details are not described herein again.

Based on the descriptions of the implementations, a person skilled in the art may understand that for the purpose of convenient and brief descriptions, division into the functional modules is merely used as an example for description. In actual application, the functions may be allocated to different functional modules for completion according to a requirement. In other words, an inner structure of an apparatus is divided into different functional modules, to complete all or some of the foregoing described functions.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A file management method, comprising:
installing, by an electronic device, a first application through an application market, wherein the first application corresponds to a permission configuration file, and the permission configuration file indicates a permission, for a file type, that is approved by the application market through reviewing and that the first application is capable of applying for;
when the first application needs to access a file in the electronic device, requesting, by the first application, to apply for a first permission;
displaying, by the electronic device, a first interface if the permission configuration file comprises the first permission, wherein the first interface is used to request a user to grant the first permission; and
obtaining, by the first application, the first permission in response to a first operation that the user agrees to grant the first permission.

2. The method according to claim 1, wherein the method further comprises:
skipping, by the electronic device, displaying the first interface if the permission configuration file does not comprise the first permission.

3. The method according to claim 1 or 2, wherein the method further comprises:
installing, by the electronic device, a second application through the application market; and
when the second application needs to access the file in the electronic device, accessing, by the second application, the file in the electronic device through a file picker provided by an operating system of the electronic device.

4. The method according to claim 3, wherein the accessing, by the second application, the file in the electronic device through a file picker specifically comprises:
displaying, by the electronic device, a second interface, wherein the second interface comprises one or more candidate files provided by the file picker;
receiving, by the electronic device, a second operation that the user determines one or more target files from the one or more candidate files; and
obtaining, by the second application in response to the second operation, a permission to access the one or more target files.

5. The method according to claim 3 or 4, wherein
the first application is a management application, and the management application is an application that relies on accessing a large quantity of one or more types of files in the electronic device to implement a main function of the management application; and
the second application is a non-management application, and the non-management application is an application that does not rely on accessing a large quantity of one or more types of files in the electronic device to implement a main function of the non-management application.

6. The method according to any one of claims 1 to 5, wherein the file in the electronic device is stored in a file management module, and the method further comprises:
accessing, by the first application, a target file through a first interface of the file management module, wherein a file type of the target file is the same as a file type that the first permission is applied for.

7. The method according to any one of claims 1 to 6, wherein that the permission configuration file indicates a permission, for a file type, that is approved by the application market through reviewing and that the first application is capable of applying for comprises any one of the following:
a permission to access or operate a picture/video file, a permission to access or operate an audio file, and a permission to access or operate a document file.

8. The method according to claim 7, wherein the permission to access or operate the picture/video file comprises: a permission to read, edit, delete, or create the picture/video file;
the permission to access or operate the audio file comprises a permission to read, edit, delete, or create the audio file; and
the permission to access or operate the document file comprises a permission to read, edit, delete, or create the document file.

9. The method according to any one of claims 1 to 8, wherein the file in the electronic device is stored in a corresponding preset directory based on the file type.

10. The method according to any one of claims 1 to 9, wherein the first application does not have a permission to create a new directory or a new file outside a preset directory that already exists in the electronic device.

11. The method according to any one of claims 1 to 10, wherein the file in the electronic device is stored in the file management module, and the method further comprises:
modifying, by the electronic device through the first application, metadata information of the target file stored in the file management module, wherein the file type of the target file is the same as the file type that the first permission is applied for; and
when the electronic device accesses the target file through the second application, obtaining, by the second application, metadata information that is of the target file and that is modified by the electronic device through the first application, wherein the second application is different from the first application.

12. An application management method, comprising:
obtaining, by an application market, a data packet of a first application and a permission that is applied for by the first application and that is submitted by a developer of the first application;
reviewing, by the application market, whether the permission applied for by the first application is proper; and
configuring, by the application market, a permission configuration file for the first application based on a review result, wherein the permission configuration file indicates a permission, for a file type, that is approved by the application market through reviewing and that the first application is capable of applying for.

13. The method according to claim 12, wherein the reviewing, by the application market, whether the permission applied for by the first application is proper comprises:
reviewing, by the application market based on an application type of the first application, whether the permission applied for by the first application is proper.

14. The method according to claim 13, wherein the application type comprises a management application and a non-management application, the management application is an application that relies on accessing a large quantity of one or more types of files in an electronic device to implement a main function of the management application, and the non-management application is an application that does not rely on accessing a large quantity of one or more types of files in the electronic device to implement a main function of the non-management application.

15. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 11 or claims 12 to 14.

16. A computer storage medium, comprising computer instructions, wherein when the computer instructions are run on an electronic device, the electronic device is enabled to perform the method according to any one of claims 1 to 11 or claims 12 to 14.
